(19) Europäisches Patentamt / European Patent Office / Office européen des brevets

(11) **EP 3 067 333 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **16158292.9**

(22) Anmeldetag: **02.03.2016**

(51) Internationale Patentklassifikation (IPC):
*C03C 3/091* (2006.01)   *C03C 3/093* (2006.01)
*C03C 3/095* (2006.01)   *C03C 3/118* (2006.01)
*C03C 10/00* (2006.01)   *C03C 17/00* (2006.01)

(52) Gemeinsame Patentklassifikation (CPC):
**C03C 3/118; C03C 3/091; C03C 3/093;**
**C03C 3/095; C03C 10/0027; C03C 17/007;**
C03C 2217/452; C03C 2217/475; C03C 2217/485;
C03C 2217/72; C03C 2217/77

(54) **VERFAHREN ZUR HERSTELLUNG EINES GLASKERAMIKARTIKELS MIT EINER FARBIGEN GLASBASIERTEN BESCHICHTUNG, SOWIE EINEN BESCHICHTETEN GLASKERAMIKARTIKEL**

METHOD FOR THE PRODUCTION OF A GLASS CERAMIC ARTICLE HAVING A COLORED GLASS-BASED COATING, AND A COATED GLASS CERAMIC ARTICLE

PROCEDE DE FABRICATION D'UN ARTICLE EN VITROCERAMIQUE AVEC UN REVETEMENT DE COULEUR A BASE DE VERRE, AINSI QU'UN ARTICLE EN VITROCERAMIQUE REVETU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2015   DE 102015103461**

(43) Veröffentlichungstag der Anmeldung:
**14.09.2016   Patentblatt 2016/37**

(73) Patentinhaber: **SCHOTT AG**
**55122 Mainz (DE)**

(72) Erfinder:
• **Dr. Siebers, Friedrich**
  **55283 Nierstein (DE)**
• **Knoche, Silke**
  **55291 Saulheim (DE)**
• **Steigenberger, Vera**
  **65474 Bischofsheim (DE)**

(74) Vertreter: **Witte, Weller & Partner Patentanwälte mbB**
**Postfach 10 54 62**
**70047 Stuttgart (DE)**

(56) Entgegenhaltungen:
EP-A1- 1 870 383        CN-A- 102 134 156
CN-A- 104 326 676       DE-A1- 1 596 981
DE-A1- 2 006 814        DE-A1- 19 617 228
DE-A1- 19 834 801       DE-C1- 19 721 737

**Beschreibung**

Die Erfindung betrifft ein Verfahren zur Herstellung eines Glaskeramikartikels mit einer farbigen glasbasierten Beschichtung, sowie einen beschichteten Glaskeramikartikel.

Es ist bekannt, dass anorganische, glasbasierte Beschichtungen den Oberflächen von Gläsern und Glaskeramiken besondere Eigenschaften verleihen.

Der Glasanteil der Beschichtung, oft auch als Glasfritte oder Glasfluss bezeichnet, verleiht der Beschichtung besondere chemische und physikalische Eigenschaften. Dies sind z.B. chemische Beständigkeit, Glanz, Abrieb- und Kratzfestigkeit sowie thermische Beständigkeit. Gegenüber Beschichtungen mit organischer Matrix zeichnen sich die anorganischen Beschichtungen durch höheren Glanz und höhere Beständigkeit gegenüber UV-Bestrahlung aus. Die Zugabe von farbgebenden Pigmenten oder Mattierungszusätzen gestattet es, die beschichteten Artikel hinsichtlich Ästhetik und Design zu gestalten und zu differenzieren. Flächige Beschichtungen dienen oft dem Schutz der Abdeckung oder zur Erzielung eines gewünschten Aussehens, wie zum Beispiel vollflächige Beschichtungen um den Rahmen von Kaminscheiben. Dekorationen werden eingesetzt für Beschriftungen, Logos, zur Erzielung eines gewünschten Designs oder auch zur Unterstützung bestimmter technischer Funktionen etwa im Fall von Displayfenstern oder der Markierung von Kochzonen. Kochflächen aus Glaskeramik werden auf ihrer Oberfläche farbig gestaltet, teils aus ästhetischen Gründen, teils zur Differenzierung der Gerätehersteller, sowie aufgrund bestimmter gesetzlicher Vorgaben, die eine Kennzeichnung von Kochzonen fordern. Wegen der hohen Temperaturen auf der Kochfläche, insbesondere in den Kochzonen, von bis zu etwa 700°C, je nach Beheizungssystem und Kochsituation, sowie den geforderten Gebrauchseigenschaften, werden für die farbliche Gestaltung fast ausschließlich glasbasierte Beschichtungen eingesetzt.

Auch bei Glasartikeln zeigen sich die positiven Eigenschaften von glasbasierten Beschichtungen. Die Glasartikel bestehen aus Kalknatronglas oder Spezialgläsern, die über niedrigere thermische Ausdehnungskoeffizienten und höhere Transformationstemperaturen verfügen. Die Glasartikel werden beispielsweise eingesetzt als Front- oder Sichtscheiben in Küchengeräten, als Blenden oder Koch- bzw. Warmhalteplatten sowie in Laborgeräten oder Pharmaverpackungsmitteln.

Glasbasierte Beschichtungen werden im Allgemeinen in die Kategorie Glasuren bzw. Emails (auch als Emaille bezeichnet) eingeteilt. Die Glasuren bestehen in der Regel aus einem klaren oder eingefärbten Glas, während Emails Überzugsmassen sind, die färbende, nicht transparente Materialien wie Pigmente enthalten. Als Pigmente können farbige, anorganische Verbindungen verwendet werden. Hierbei dürfen die Pigmente üblicherweise vom Glasfluss nicht oder nur geringfügig angegriffen werden. Der Beschichtungsvorgang selbst wird meist als Glasieren, Emaillieren, Dekorieren oder Bedrucken bezeichnet.

Glasbasierte Beschichtungen sind auch seit langer Zeit bei der Beschichtung von Metallen und Keramiken im Einsatz. Bei diesen Beschichtungen ist es möglich, und es wird angestrebt, die thermischen Ausdehnungskoeffizienten von Beschichtung und Trägermaterial gut anzupassen. Dadurch sind größere Schichtdicken als 20 $\mu$m möglich, die die Schutzwirkung und die Gestaltungsmöglichkeiten verbessern. Die Spezifikationen und die Anforderungen an die Gebrauchseigenschaften sowie die ästhetischen Merkmale sind daher völlig anders als bei einer glasbasierten Beschichtung von Glaskeramiken mit niedriger thermischer Ausdehnung. Einen Sonderfall nehmen Effektglasuren für die Keramik ein, bei denen es durch hohe Gehalte an B2O3, P2O5, F, ZnO, beim Einbrand zu Phasentrennungen, wie Entmischungen oder Kristallisation, kommen kann. Diese Effektglasuren zeigen besondere ästhetische Effekte, die geringe chemische Beständigkeit ist dabei von untergeordneter Bedeutung. Bei der Herstellung von Beschichtungen für keramische Artikel geht man in der Regel von Mühlenversätzen aus, bei denen in einem wässrigen Schlicker neben dem Glaspulver weitere Zusätze, wie Tone, Stellmittel, anorganische Verbindungen und Pigmente zugesetzt werden, wobei die Komponenten beim Einbrand reagieren und sich der Glasanteil dabei erhöht.

Für die Beschichtung von Glas oder Glaskeramiken sind technisch ausgereifte Verfahren und Anlagen im Gebrauch. Es dominieren Beschichtungsverfahren, bei denen ein flüssiges bzw. pastenartiges Beschichtungsmaterial aufgebracht wird. Diese Paste oder Tinte kann mittels verschiedener Verfahren, beispielsweise mittels Siebdruck, Tampondruck, Abziehbildverfahren, Offset-Druck, Rollenbeschichtung, Rakeln, Fluten, Spin-Coating, oder auch über Tauch- und Sprühverfahren, sowie neuerdings durch Tintenstrahlen, auf die Oberfläche des Substrats appliziert werden.

Die Paste besteht üblicherweise aus dem gemahlenen Glaspulver, den in der Regel zugesetzten Pigmenten, optional weiteren anorganischen Zusatzstoffen und den organischen Hilfsstoffen, die beim Einbrennen und Glattfließen der Beschichtung entfernt werden.

Wegen der besonderen Anforderungen, die an glasbasierte Beschichtungen von Gläsern oder Glaskeramiken gestellt werden, werden die Komponenten des Glases meist vorher vollständig aufgeschmolzen und zu einer Glasfritte geeigneter Körnung gemahlen.

Aus der EP 1 870 383 A1 ist es bekannt, BOROFLOAT®-Glas, d.h. ein Glas, das neben dem Hauptbestandteil ZnO, $B_2O_3$, $SiO_2$, sowie MgO und $Bi_2O_3$ aufweist, mit einer keramischen Farbe zu beschichten. Die keramische Farbe besteht aus einer Glasfritte aus BOROFLOATS-Glas als Hauptbestandteil, der Siebdrucköl und ggf. weitere Bestandteile zugemischt werden, um eine siebdruckfähige Paste herzustellen. Die Paste wird auf Glasplatten aufgetragen und dann bei 620 °C eingebrannt. Durch den Gehalt an $B_2O_3$ und MgO kristallisieren beim Aufschmelzen Zinkborat ($Zn3B2O6$)- und Suanit-Kristalle ($Mg_2B_2O_5$) aus, was der Beschichtung ein glänzend weißes, transluzentes Erscheinungsbild verleiht.

Glaskeramiken werden vorzugsweise durch Erwärmen aus kristallisierbaren Gläsern hergestellt.

Kristallisierbare Gläser des Systems $Li_2O$-$Al_2O_3$-$SiO_2$ werden in Glaskeramiken mit Hochquarz-Mischkristallen oder Keatit-Mischkristallen als Hauptkristallphasen umgewandelt. Für den ersten Typ von Glaskeramiken finden sich in der Literatur auch die Synonyme "β-Quarz" oder "β-Eukryptit" und für den zweiten Typ "β-Spodumen" als Bezeichnung für die Kristallphasen. Diese Kristallphasen sind für den niedrigen thermischen Ausdehnungskoeffizienten verantwortlich. In der Regel beträgt die thermische Ausdehnung zwischen 20 und 700 °C weniger als $2 \cdot 10^{-6}$/K.

Je nach Kristallitgröße können solche Glaskeramiken transparent, transluzent oder opak vorliegen. Die Einfärbung über Farboxide wird je nach gewünschter Anwendung vorgenommen.

Hauptsächliche Verwendungen der Glaskeramikartikel mit niedriger thermischer Ausdehnung, meist mit Beschichtungen oder Dekorierung, sind temperaturwechselbeständige Kochgeschirre, Brandschutzgläser, Abdeckungen im Beleuchtungssektor, Trägerplatten oder Ofenauskleidungen, Kaminsichtscheiben, Backofenscheiben, insbesondere für Pyrolyseherde, und besonders Kochflächen. Bei den Kochflächen sind eingefärbte Glaskeramiken sehr verbreitet, neuerdings auch transparente Glaskeramiken mit farbiger blickdichter Unterseitenbeschichtung.

Für die Beschichtung von Glaskeramiken sind Email-Zusammensetzungen bekannt.

So wird in der DE 197 21 737 C1 eine blei- und cadmiumfreie Glaszusammensetzung zum Glasieren, Emaillieren und Dekorieren von Gläsern oder Glaskeramiken sowie ein Verfahren zu Herstellung einer damit beschichteten Glaskeramik beschrieben. Die Schrift enthält Beispiele für Glasuren und für im Email-Beschichtungen. Die durch Zusatz von Pigmenten hergestellten Email-Beschichtungen haben aufgrund ihrer Rauigkeit Nachteile bezüglich der Gebrauchseigenschaften. Bei dekorierten Kochflächen ergeben sich beim Verschieben von Kochgeschirren störende Geräusche.

Die US 5326728 A beschreibt bleifreie Email-Zusammensetzungen für die Dekoration von Glaskeramiken mit niedriger thermischer Ausdehnung bestehend aus Glasfritten einer definierten Zusammensetzung und mit Zusatz von färbenden Pigmenten. Die Komponenten $TiO_2$ und $ZrO_2$ sind in der Glasfritte auf 0 bis 2 bzw. 0 bis 5 Gew.-% beschränkt. Für die Herstellung der Email-Beschichtungen werden 10 bis 40 Gew.-% Pigmente, und in den Beispielen wird 30 Gew.-% Titanoxid zugesetzt.

Die EP 1435759 A2 offenbart Kochflächen mit Induktionsbeheizung aus transparenten Glaskeramiken mit blickdichter Unterseitenbeschichtung wobei die Oberseite eine dichte glasbasierte Beschichtung mit einem färbenden Pigment besitzt und die Unterseite eine blickdichte poröse Schicht mit einem zweiten Pigment aufweist. Die in der Beschichtung der Gebrauchsoberseite vorhanden Pigmente haben Nachteile bezüglich der Gebrauchseigenschaften und machen sich hinsichtlich der Geräusche beim Verschieben von Kochgeschirr störend bemerkbar.

Hinsichtlich der Optimierung der Gebrauchseigenschaften "Reinigbarkeit" und "Abrieb" gab es bisher Entwicklungen hin zu Dekoren mit geringer Rauheit gekennzeichnet durch eine Minimierung des Ra-Wertes. So ist aus der DE 103 38 165 A1 eine Kochfläche mit einem Dekor bekannt, das aufgrund definiert eingestellter Rauigkeitswerte einen geringeren Abrieb des Topfbodenmaterials und dadurch eine verringerte Verschmutzungsneigung des Dekors bewirkt. Die Dekorfarbe enthält einen farblos aufschmelzenden Glases und 0 - 10 Gew.-% eines schwarzen Pigmentes. Eine Glasur ohne Pigmente hat den Nachteil mangelnder Farbwirkung während sich beim Zusatz von Pigmenten die beschriebenen Nachteile ergeben. Auch eignet sich der Rauhigkeitswertes Ra nicht um die Geräuschentwicklung beim Verschieben von Kochgeschirr zu beschreiben. Hier ist es erforderlich, die Korrelation mit den topografischer Details der Oberflächenstruktur zu erarbeiten.

Die Verwendung einer blei -und cadmiumfreien Glaszusammensetzung mit bestimmten Komponenten und bis zu 30 Gew.-% eines bei Brenntemperatur beständigen Pigmentes zum Beschichten von Glaskeramiken und Gläsern mit einer thermischen Ausdehnung von weniger als $5 \cdot 10^{-6}$ / K wird in der DE 4201286 C2 beschrieben.

Email-Farben mit Oberflächenkristallisation zur Erzielung haftvermindernder Eigenschaften bei der Beschichtung von Glasscheiben sind bekannt. Die randlichen, schwarzen Beschichtungen von Automobilscheiben werden über glasbasierte Email-Farben mit solchen Eigenschaften hergestellt. Dies ist erforderlich, weil z.B. beim Pressbiegen die Farbe bei höheren Temperaturen in Kontakt mit dem Presswerkzeug kommt. Die haftvermindernden Eigenschaften dieser Email-Farben beruhen darauf, dass die Glasfritte teilweise kristallisiert. Die Kristalle verhindern das Ankleben der Farben bei höheren Temperaturen. Die Kristallisation muss eng kontrolliert werden, weil es sonst bei zu schwacher Kristallisation zum Kleben kommt. Bei zu starker Kristallisation der Glasfritte schmilzt diese nicht porenfrei auf und die Farbe wird darüber hinaus grau. Die Farben sind über Pigmente eingefärbt und eine Farbveränderung soll vermieden werden. Die Kristallisation hat zum Ziel, die Rauigkeit zu erhöhen um die haftvermindernden Eigenschaften sicherzustellen. Die gebräuchlichsten auskristallisierenden Phasen sind Bismut-Silikate, Zink-Silikate und Zink-Borate. Solche Farben sind in der EP 0 895 969 A1 offenbart.

Für die Gläser oder Glaskeramiken in den genannten Anwendungsbereichen ergeben sich unterschiedliche Anforderungen an die Glasur bzw. an das Email. Neben den ästhetischen Kriterien muss die glasbasierte Beschichtung gegenüber den in der Technik und im Haushalt üblichen Angriffen ausreichend thermisch, chemisch und physikalisch beständig sein. Bei Anwendungsfällen mit thermischer Belastung, wie z.B. Kaminscheiben oder Kochzonenmarkierungen darf sich der Farbeindruck der Beschichtung in Bereichen die heiß werden gegenüber kalten Bereichen nicht auffällig verändern. Chemische Beständigkeit ist gegenüber Säuren und Laugen erforderlich, wie sie im Haushalt oder auch in der Industrie als Reinigungsmittel eingesetzt werden oder in Lebensmitteln vorkommen. Mechanische Abriebbeständigkeit und Haftfestigkeit sowie ausreichende Festigkeit der beschichteten Bereiche des Substrats sind weitere Anforderungen. Bei Kochflächen gibt es weitere spezielle Anforderungen wie die Stabilität gegenüber thermischen Wechselbeanspruchungen, Kratz- und Abriebfestigkeit sowie ein gutes Reinigungsverhalten bei festgebrannten Nahrungsmittelresten.

Die Haltbarkeit von glasbasierten Beschichtungen auf einem Substrat, wie Glas, Glaskeramik, Keramik oder Metall wird wesentlich durch die Ausbildung von Spannungen bestimmt, wobei zu hohe Spannungen die Haftfestigkeit beeinträchtigen und schlimmstenfalls zu Abplatzungen führen. Diese Spannungen entstehen vor allem durch die Unterschiede im thermischen Ausdehnungsverhalten von Beschichtung und Substrat, so dass einer Anpassung der thermischen Ausdehnung an das Substrat eine hohe Bedeutung zukommt. Im Allgemeinen wird eine glasbasierte Beschichtung angestrebt, die eine im Vergleich zum Substrat geringfügig niedrigere thermische Ausdehnung aufweist. Die nach dem Abkühlen entstehenden Druckspannungen in der Beschichtung sind vorteilhaft auf die mechanischen Eigenschaften.

Bei den Glaskeramiken mit niedriger thermischer Ausdehnung ist eine Anpassung des Ausdehnungskoeffizienten der glasbasierten Beschichtung im Allgemeinen nicht möglich, wodurch es zu Spannungen zwischen Substrat und Beschichtung kommt. Diesem Problem wird durch das Auftragen sehr dünner Schichten von üblicherweise weniger als 20 $\mu$m und meist weniger als 10 $\mu$m begegnet, wobei die Farbwirkung (Deckkraft, Farbeindruck) sowie die Schutzwirkung gegen chemischen und physikalischen Angriff erheblich eingeschränkt werden können. Mit eingefärbten Glasuren ohne Pigment lässt sich bei den geringen Schichtdicken keine ausreichende Farbwirkung erreichen.

Durch die geringen Schichtdicken macht sich die Zugabe der Pigmente störend hinsichtlich der Glattheit der Schicht bemerkbar. Die zugegebenen Pigmente führen zu einer erhöhten Rauigkeit gegenüber der Glasur und dem unbeschichteten Glas- oder Glaskeramiksubstrat. Dadurch wird eine Reihe von Eigenschaften wie Glanz, , Reinigungsverhalten und Topfabrieb negativ beeinflusst.

In neuerer Zeit werden auch zunehmend Kochflächen angeboten, bei denen variable Kochzonen technisch realisiert sind. Das heißt, der Benutzer kann den Topf auf der Kochfläche verschieben, und die Beheizung erfolgt in der ausgewählten Zone. Bei diesen Kochflächen handelt es sich bevorzugt um solche, die über Induktionsbeheizung verfügen. Beim Verschieben der Töpfe über dekorierte Bereiche, mit denen die verschiedenen Kochzonen markiert sind, kommt es, abhängig von der Rauigkeit der Email-Beschichtung, zu störend empfundenen Topfgeräuschen.

Aus Gründen der Umweltfreundlichkeit werden zunehmend Beschichtungen gefordert, die frei von toxikologisch bedenklichen Komponenten, wie Pb-, Cd-, Hg- und CrIV-Verbindungen, sind.

Aus den genannten Verwendungen beschichteter Glas- oder Glaskeramikartikel mit niedriger thermischer Ausdehnung ergeben sich besondere Anforderungen an die chemischen, physikalischen und thermischen Eigenschaften, die auch für die Beschichtung bzw. Dekorierung gelten.

Vor diesem Hintergrund liegt der Erfindung die Aufgabe zu Grunde, ein einfaches, umweltfreundliches Verfahren zur wirtschaftlichen Herstellung eines Glaskeramikartikels auf der Basis eines Lithiumaluminosilikat-Glases mit farbiger glasbasierter Beschichtung zu offenbaren, wobei die Glaskeramik eine thermische Ausdehnung ($\alpha_{20/700}$) im Bereich von 20 °C bis 700 °C von weniger als $2 \cdot 10^{-6}$/K aufweist, und wobei verbesserte Gebrauchseigenschaften des Glaskeramikartikels erreicht werden.

Vorzugsweise sollen auch die Möglichkeiten der Gestaltung und des Designs erweitert werden und eine niedrigere Rauigkeit der Beschichtung erzielt werden. Weiter bevorzugt sollen geräuschoptimierte Eigenschaften bereitgestellt werden. Schließlich ist eine umweltfreundliche Zusammensetzung bevorzugt. Ferner soll ein Glaskeramikartikel mit einer farbigen glasbasierten Beschichtung offenbart werden, der verbesserten Gebrauchseigenschaften aufweist, bevorzugt insbesondere mit einer geringeren Rauigkeit der Beschichtung und weiter bevorzugt mit geräuschoptimierten Eigenschaften.

Weiterhin soll für den beschichteten Glaskeramikartikel eine bevorzugte Verwendung angegeben werden.

Erfindungsgemäß wird die Aufgabe durch ein Verfahren zur Herstellung eines Glaskeramikartikels gemäß Anspruch 1 gelöst.

Die Aufgabe wird ferner durch einen beschichteten Glaskeramikartikel gemäß Anspruch 10 gelöst.

Die glasbasierte Beschichtung entwickelt also ihre Farbe beim Einbrand. Beim Beschichtungsvorgang fließt das Glaspulver glatt und es kristallisieren anorganische Farbkörper aus, die der Beschichtung eine Farbwirkung verleihen.

Die Farbwirkung kann auf Streuung oder Lichtabsorption und damit verbundener selektiver Remission durch die entstehenden Kristallite beruhen, die über einen anderen Brechungsindex als die Glasmatrix verfügen. Mit diesem besonderen Gefüge der Beschichtung gehen auch die verbesserten Eigenschaften einher. Insbesondere ist die Rauigkeit der entstehenden Beschichtung deutlich verringert und der Glanz erhöht, da sich die Kristallite nach dem Glattfließen des Glaspulvers im inneren Volumen der Beschichtung bilden. Die Kristallite ragen daher nicht aus der Oberfläche heraus, und es ergibt sich eine wesentlich glattere Oberfläche der Beschichtung.

Bei einer im Stand der Technik üblichen Zugabe von Pigmenten sind diese als nahezu inerte Körper von Anfang an in der Beschichtung vorhanden und erhöhen die Rauigkeit der Oberfläche. Die Rauigkeit der Beschichtung wird erhöht, weil sich die Pigmente an der Oberfläche anreichern können und weil die Pigmente nicht vollständig eingebettet werden und zu Erhebungen auf der Oberfläche führen. Dies ist deswegen so ausgeprägt, weil die zulässigen Schichtdicken für den Glaskeramikartikel gering sind und mit einer typischen Größe von 4 $\mu$m nicht deutlich über der Größenordnung der Pigmente, üblicherweise 200 nm bis 1 $\mu$m liegen. Hinzu kommt der hohe Anteil von Pigmenten für eine Beschichtung mit ausreichender Farbwirkung in der Größenordnung von 15 bis 50 Gew.-%.

Durch den höheren Glasanteil der Beschichtung kommt es bei dem erfindungsgemäßen Verfahren zu einem innigen Verbund von Beschichtung und Substrat. Dadurch wird die Haftfestigkeit der glasbasierten Beschichtung auf dem Substrat verbessert. Eine Zugabe von Pigmenten, die nicht in der Glasschmelze auskristallisieren, kann gegenüber dem Stand der Technik deutlich reduziert werden, oder es kann darauf ganz verzichtet werden.

Mit der beim Einbrand der Beschichtung entstehenden besonderen Mikrostruktur werden die Möglichkeiten der Gestaltung und des Designs erweitert. Wenn relativ kleine anorganische Farbkörper auskristallisiert werden, können zum Beispiel über Streuung und bei eingestellter niedriger Absorption changierende Farbeffekte entstehen. Bei transparenten Glaskeramiken kann dadurch die rückseitige Beschichtung in das Design einbezogen werden. Der Farbeffekt wird dabei von der rückseitigen Beschichtung und generell also auch bei eingefärbten Glaskeramiken vom Betrachtungswinkel abhängig. Ebenso können absorbierende farbige Beschichtungen über die Einstellung von Menge und Größe der auskristallisierenden Farbkörper hergestellt werden.

Nach dem erfindungsgemäßen Verfahren wird ein Glaskeramikartikel auf der Basis einer LAS-Glaskeramik hergestellt, der über eine niedrige thermische Ausdehnung von weniger als $2 \cdot 10^{-6}$/K im Temperaturbereich zwischen 20 °C und 300 °C verfügt. Besonders bevorzugt werden Glaskeramiken hergestellt, die als Haupkristallphase Hochquarz- und/oder Keatit-Mischkristalle besitzen Diese Glaskeramiken werden aus kristallisierbaren Lithiumaluminiumsilikat-Gläsern hergestellt.

Hierzu kann etwa ein Substrat aus einem kristallisierbaren Lithiumaluminiumsilikat-Glas bereitgestellt werden.

Das schichtbildende Material wird vorzugsweise mit bekannten Beschichtungsverfahren auf einer Seite des Substrates aufgebracht. Dazu geeignet ist beispielsweise ein Siebdruck- oder Tintenstrahlverfahren (Ink-Jet).

Bevorzugt hat die Zusammensetzung des schichtbildenden Materials eine umweltfreundliche Zusammensetzung und ist, bis auf unvermeidbare Verunreinigungen, frei von Pb, Cd und auch Hg sowie Cr$^{VI}$, d.h. solche Verbindungen werden nicht absichtlich zugesetzt. Je nach Reinheit der verwendeten Rohstoffe ist der Gehalt dieser Komponenten üblicherweise kleiner als 1000 ppm und bevorzugt kleiner als 500 ppm.

Das schichtbildende Material umfasst Glaspulver als Hauptbestandteil. Das bedeutet, dass der Anteil an Glaspulver bezogen auf die Feststoffmasse mehr als 50 Gew.-%, bevorzugt mehr als 60 Gew.-% beträgt, weiter bevorzugt mehr als 80 Gew.-% und besonders bevorzugt mehr als 85 Gew.-%. Wenn besonders geringe Rauigkeitswerte der Beschichtung gewünscht sind, beträgt der Anteil an Glaspulver mindestens 90 Gew.-%, bevorzugt mindestens 95 Gew.-% und besonders bevorzugt 100 Gew.-%.

Das beschichtete Substrat wird erwärmt, wobei gemäß einer ersten Ausführung die Glaskeramik und die glasbasierte Beschichtung in einem Prozessschritt erhalten werden. Während der Erwärmung wird also das Ausgangsglas des Substrates (auch als Grünglas bezeichnet) keramisiert (d.h. kristallisiert) und gleichzeitig das Glaspulver der glasbasierten Beschichtung aufgeschmolzen.

Durch Sintern und Glattfließen der Glaspulver bildet sich eine glatte Oberfläche aus und es kristallisieren anorganische Farbkörper in der Beschichtung aus. Bei der obigen Variante des erfindungsgemäßen Verfahrens wird der Einbrand der glasbasierten Beschichtung während des Kristallisationsprozesses, auch Keramisierung genannt, durchgeführt. Oft bildet sich hierbei an der Grenzfläche zwischen glasbasierte Beschichtung und der Glaskeramik eine Reaktionszone mit Kristallen aus, die die Haftung verbessert. Dieser simultane Prozess wird Primäreinbrand genannt.

In einer alternativen Ausführung des erfindungsgemäßen Verfahrens wird ein Substrat aus einer bereits kristallisierten Glaskeramik bereitgestellt. Das heißt, die Keramisierung des kristallisierbaren Glases wurde bereits in einem vorhergehenden thermischen Prozess durchgeführt. Den nachgelagerten Beschichtungsprozess unter Bildung der glasbasierten Beschichtung mit auskristallisierten anorganischen Farbkörpern bezeichnet man dann als Sekundäreinbrand. Dabei wird dann auch abhängig vom Temperaturprogramm die gewünschte Mikrostruktur der Glaskeramik eingestellt. Optional werden hierbei tendenziell niedrigere Temperaturen und/oder kürzere Behandlungszeiten verwendet.

Die Glaskeramiken selbst können, wie beschrieben, transparent, transluzent oder opak sein und optional durch Farboxide eingefärbt sein. Bevorzugt handelt es sich um Glaskeramiken mit umweltfreundlicher Zusammensetzung, das heißt sie sind technisch frei von Arsen- oder an Antimon-Verbindungen als Läutermittel. Solche Glaskeramiken werden in transparenter Form beispielsweise in der DE 102012202697 A1 und in transparenter eingefärbter Form in der DE 102008050263 A1 beschrieben.

Die Prozessschritte bei der Herstellung der Glaspulver orientieren sich am Stand der Technik. Die Zusammensetzungen der Glaspulver werden in üblicher Weise aus Rohstoffen bei Temperaturen um 1400 °C erschmolzen. Als Rohstoffe können auch die anorganischen Farbkörper, die zur Auskristallisation gebracht werden sollen, eingesetzt werden. So ist es zum Beispiel möglich, die Pigmente selbst, z.B. Spinell-Mischkristalle, der Schmelze zuzusetzen. Dies ist oft wirtschaftlicher als die Farboxide einzeln für die Schmelze als Gemengerohstoffe vorzumischen. Wichtig ist, dass die als Rohstoffe bei der Schmelze eingesetzten Pigmente aufgeschmolzen werden und keine störenden Relikte verbleiben, die das Glattfließen beim Einbrand erschweren. Die erhaltenen Glasschmelzen werden in Wasser oder zwischen gekühlten Metallwalzen abgeschreckt. Durch die hohen Abkühlraten beim Abschrecken der Glasschmelzen wird ein vorzeitiges Auskristallisieren der anorganischen Farbkörper vermieden.

Die aus der Schmelze erhaltenen Glasstücke werden zu einem Glaspulver der gewünschten Korngröße vermahlen, Zum Mahlen können verschiedene Trocken- und Nassmahltechnologien angewendet werden, bspw. Kugelmühlen, Strahlvermahlung. Es werden die Trockenmahlverfahren, wie Gegen-, Luft- oder Dampfstrahlvermahlung, bevorzugt, um die Agglomeratbildung während der bei Nassvermahlung erforderlichen Trocknung (weitestgehend) zu verhindern. Insbesondere wird die Vermahlung mit einer trockenen Rührwerkskugelmühle in Kombination mit einem Sichter bevorzugt, um eine enge Partikelverteilung ohne Agglomerate zu erhalten.

Da es bei den Beschichtungen bzw. Dekoren auf eine möglichst glatte Oberfläche ankommt, in der keine Unebenheiten enthalten sind, eignen sich Trockenmahlverfahren besonders, um unerwünschte Partikel an der Oberfläche, die durch Agglomerate bedingt sind, zu vermeiden.

In vorteilhafter Ausgestaltung der Erfindung erfolgt das Vermahlen und Homogenisieren der Glasfritte derart, derart dass der Volumenanteil an Agglomeraten der Größe > 10 $\mu$m und bevorzugt solchen der Größe > 5 $\mu$m kleiner als 1 %, vorzugsweise kleiner als 0,1 %, besonders bevorzugt kleiner als 0,01 % ist.

Es hat sich gezeigt, dass insbesondere die Vermeidung von Agglomeraten wesentlich ist, um das hinsichtlich Lautheit und Schärfe empfundene Geräusch beim Verschieben eines Kochgeschirrs so gering wie möglich zu halten.

Bezogen auf den Feststoffanteil enthält das schichtbildende Material bevorzugt neben den Glaspulvern als Hauptbestandteil weniger als 20 Gew.-% kristalline Bestandteile wie Schmelzrelikte, Pigmente oder anorganische Zusatzstoffe. Bevorzugt enthält das schichtbildende Material weniger als 10, weiter bevorzugt höchstens 5 und besonders bevorzugt weniger als 3 Gew.-% an kristallinen Bestandteilen, um die Glattheit der Oberfläche nach dem Einbrand zu optimieren. Besonders bevorzugt ist das schichtbildende Material weitgehend amorph (< 1 Gew.-% an Kristallphasen).

Die Beschichtung weist vorzugsweise eine Rauigkeit von Ra < 0,4 $\mu$m auf.

Weiter bevorzugt weist die Beschichtung einen mit Weißlicht-Interferenzmikroskopie bestimmten Rauheitsanteil rms im Bereich von 10 mm$^{-1}$ bis 20 mm$^{-1}$ kleiner als 0,1 $\mu$m und einen Rauheitsanteil rms im Bereich von 20 mm$^{-1}$ bis 50 mm$^{-1}$ kleiner als 0,045 $\mu$m auf.

Hierdurch lassen sich besonders günstige akustische Eigenschaften erzielen, was insbesondere bei einer Verwendung als Kochflächen wichtig ist, bei denen ein Verschieben von Kochgeschirr, wie etwa bei Induktionskochflächen üblich, zu möglichst geringer Lautheit und Schärfe führen soll.

Bevorzugt wird die Beschichtung als geräuschoptimierte Beschichtung verwendet, vorzugsweise mit einer Schärfe < 3 acum und/oder einer Lautheit < 7 sone, gemessen nach DIN 45631/A1:2010-03 und DIN 45692:2009-08 auf dem beschichteten Substrat mit den Außenmaßen 500 x 550 mm, unter Verwendung eines Stahlemailtopfes mit emailliertem Boden der Firma Silit, des Typs Silargan Bratentopf 20 cm Accento mit einem Durchmesser des Stellbodens von 17 cm und einem innen aufgenommenen Gewicht der Masse von 1 kg, unter Verschieben des Topfes mit einer Geschwindigkeit von 0,08 m/s.

Ein zur Messung (in neuwertigem Zustand, d.h. der Topf hat weniger als 50 Prüfzyklen hinter sich) verwendeter Topf des Typs Silargan Bratentopf 20 cm Accento, wird von der Firma Silit vertrieben. Er besitzt einen emaillierten Boden mit einer Vickers-Härte von 635 +/- 50 HV 0,1/10 nach DIN EN ISO 6507-1 und einer Rauheit Ra zwischen 0,2 - 0,9 $\mu$m nach DIN EN ISO 4288:1998, einen Durchmesser des Stellbodens von 17 cm, eine Höhe von 8,5 cm, einen Innendurchmesser am oberen Rand von 20 cm und ein Leergewicht von 1,6 kg.

Die Farbe der Beschichtung unterscheidet sich vorzugsweise um einen Farbabstand $\Delta$E von mindestens 1 gemessen in Remission im CIELAB Farbsystem von der des Substrates.

Die auskristallisierten anorganischen Farbkörper können zumindest zum Teil eine Kristallstruktur aufweisen, die aus der Gruppe ausgewählt ist, die aus einer Kristallstruktur des Typs Rutil, Spinell, Zirkon, Baddeleyit, Kassiterit, Ceroxid, Korund, Olivin, Sphen, Granat, Willemit, Periklas, sowie Mischkristallen hiervon besteht.

Bevorzugt weisen die auskristallisierten anorganischen Farbkörper eine mittlere Größe von 0,05 bis 2 $\mu$m auf.

Optional werden als anorganische Zusatzstoffe für das schichtbildende Material Verbindungen eingesetzt, die die Kristallisation der anorganischen Farbkörper in die gewünschte Richtung lenken. Solche Keime können zum Beispiel aus Oxide bestehen, wie ZnO, ZrO$_2$, TiO$_2$, oder aus arteigenen Keimen, wie z.B Nanopigmente von Spinell-Mischkristallen. Letzteres bedeutet dass die gewünschten auskristallisierenden Farbkörper separat hergestellt, vermahlen und als Keime zugegeben werden. Bevorzugt wird dabei eine hohe Mahlfeinheit, d.h. Korngrößen von kleiner 500 nm bevorzugt kleiner 100 nm um die gewünschten niedrigen Rauigkeitswerte der Beschichtung sicherzustellen.

Je nach Beschichtungsverfahren werden verschiedene organische Hilfsmittel zugesetzt, die sich beim Erwärmen und dem Einbrand der Beschichtung verflüchtigen. Die Beschichtung erfolgt in der Regel im Flüssigauftrag über Siebdruck, Tampondruck, Abziehbildverfahren, Offset-Druck, Rollenbeschichtung, Rakeln, Fluten, Spin-Coating, oder auch über Tauch- und Sprühverfahren sowie neuerdings durch Tintenstrahlen.

Im Rahmen der Erfindung werden die Substrate in einem bevorzugten Verfahren über Siebdruck beschichtet. Dabei wird das Pulver durch Zugabe eines Siebdrucköls in die für den Siebdruck benötigte Viskosität gebracht. Die Homogenisierung der erhaltenen Paste und das Aufbrechen von Agglomeraten erfolgt über einen Dreiwalzenstuhl. Die Gewebefeinheit des verwendeten Siebes bestimmt zusammen mit den Pulver- und Ölanteilen sowie deren Dichten die Schichtdicke der Beschichtung nach dem Einbrand.

In einem weiteren bevorzugten Verfahren erfolgt die Beschichtung über den Tintenstrahldruck. Da das schichtbildende Material bei dem erfindungsgemäßen Verfahren nur über geringe, bevorzugt keine kristallinen Bestandteile verfügt, ist das Verfahren für diese Auftragsart besonders vorteilhaft. Bei üblichen keramischen Tinten für diesen Auftrag kommt es bedingt durch die größere Härte der Pigmente zur verstärktem mechanischen Verschleiß des Druckkopfes. Auch kann das Glaspulver bei dem erfindungsgemäßen Verfahren sehr fein d.h. auf eine mittlere Korngröße von kleiner 2 $\mu$m und nach feiner unter 1 $\mu$m vermahlen werden ohne dass die Farbwirkung wie bei Verwendung von Nanopigmenten beeinträchtigt wird. Dies ist für den geringen Verschleiß des Druckkopfes von Vorteil.

insbesondere kann auf diese Weise ein Schichtdekor erzeugt werden, das nach dem Einbrand auskristallisierte Farbkörper > 1 $\mu$m enthält, wobei die Korngrößenverteilung der Pulverbestandteile in dem schichtbildenden Material einen d90-Wert kleiner als 1 $\mu$m aufweist. Dies ist auf herkömmliche Weise (Verwendung von Glaspulver mit zugemischten Pigmenten) nicht darstellbar.

Um die Haftung und das Glattfließen der Beschichtung auf dem Substrat sicherzustellen, liegt die Temperatur beim Erwärmen des Substrates über der Erweichungstemperatur Ew des Glaspulvers. Bevorzugt liegt die maximale Temperatur beim Erwärmen mindestens 80, bevorzugt mindestens 100 °C und weiter bevorzugt mindestens 150 °C oberhalb der Erweichungstemperatur. Bei der maximalen Temperatur des Einbrandes bildet sich die Oberfläche der glasbasierte Beschichtung mit der gewünschten niedrigen Rauigkeit aus.

Vorzugsweise wird ein schichtbildendes Material bereitgestellt, das Glaspulver mit mehr als 3 bis höchstens 50 Gew.-% an kristallisierbaren färbenden Komponenten enthält. Für eine ausreichende Farbwirkung sind mindestens 5 Gew.-% an kristallisierbaren Komponenten vorteilhaft. Der Gehalt sollte höchstens 50 Gew.-% betragen, weil höhere Gehalte für das Glattfließen der Beschichtung von Nachteil sind und zu ungewünschten Rauigkeiten führen. Bevorzugt sind mehr als 10 Gew.-% und besonders bevorzugt mehr als 15 Gew.-% an kristallisierbaren Komponenten enthalten. Bevorzugt beträgt der Gehalt an kristallisierbaren Komponenten höchstens 30, und besonders bevorzugt höchstens 25 Gew.-%, um das Glattfließen zu optimieren und um die Rauigkeit der Beschichtung weiter zu verringern.

Das Glaspulver besteht vorzugsweise aus einer Zusammensetzung, bei der ausgehend von einem geeigneten Basisglas kristallisierbare Komponenten zugesetzt und gemeinsam zu einem homogenen Glas geschmolzen wurden. Beim Erkalten sind die zugesetzten Komponenten als anorganische Farbkörper auskristallisierbar.

In den Versuchsreihen wurden ausgehend vom Basisglas geeignete kristallisierbare Komponenten ermittelt, die sich aufgrund der thermodynamischen Löslichkeitsgrenzen für das erfindungsgemäße Verfahren eignen. Die auskristallisierten Farbkörper färben durch Streuung und/oder Absorption. Die dadurch verursachte selektive Remission wird vom Betrachter wahrgenommen. Auskristallisierende Komponenten, deren Wirtsgitter andere Farboxide als Dotierung aufnehmen können, eignen sich für die Bereitstellung mehrerer Farbtöne. So kristallisiert zum Beispiel die Komponente $TiO_2$ als Anatas oder Rutil aus. Das Wirtsgitter dieser Kristallstruktur ist zur Aufnahme von Farboxiden wie $Cr_2O_3$ oder $CoO$ befähigt, die dem sonst mit weißem Farbton auskristallisierenden $TiO_2$ andere, ins Gelbe bzw. Blaue gehende Farbtöne verleihen. Diese zur Dotierung befähigten Farboxide werden optional beim Schmelzen des Glaspulvers zugesetzt. Tabelle 2 zeigt eine Auswahl geeigneter Kristallstrukturen und deren Dotierungen, ohne sich auf diese zu beschränken. Weitere nicht aufgeführte Kristallstrukturen sind beispielsweise Olivin, Willemit, Sphen, Granat, Periklas.

Die nicht auskristallisierenden Komponenten des Glaspulvers bilden das Basisglas. Da dieses als Glasmatrix in der Beschichtung fungiert und die auskristallisierten Farbkörper umschließt, ist es für die chemischen, physikalischen und thermischen Eigenschaften der Beschichtung verantwortlich.

Vorzugsweise wird ein Basisglas bereitgestellt, das über eine Erweichungstemperatur von 560 bis 850 °C verfügt. Die Erweichungstemperatur sagt etwas aus über die thermische Stabilität der Beschichtung. Bei höheren Werten der Erweichungstemperatur als 560 °C ist die Mikrostruktur der Beschichtung mit den auskristallisierten Farbkörpern bezüglich Wachstum und stofflicher Veränderung stabiler gegenüber thermischer Beanspruchung. Das bedeutet zum Beispiel bei Kochflächen, dass dekorierte Bereiche mit Beschichtung in den heißen Kochzonen stabiler gegen Farbveränderungen sind. Bevorzugt liegt die Erweichungstemperatur des Basisglases oberhalb von 630 °C und besonders bevorzugt oberhalb 680 °C. Höhere Erweichungstemperaturen als 850 °C sind für transparente Glaskeramikartikel ungünstig, weil dann für das Glattfließen der Beschichtung höhere Temperaturen benötigt werden, die für die Transparenz der Glaskeramikartikel bereits nachteilig sind. Bevorzugt legt der obere Wert der Erweichungstemperatur unterhalb von 800 °C und besonders bevorzugt unterhalb 780 °C. Bei der Beschichtung von Glasartikeln wird die Erweichungstemperatur bei vergleichsweise niedrigeren Werten von bevorzugt unter 670 °C gewählt, um eine Verformung der Glasartikel zu verhindern.

Ein allgemeiner Zusammensetzungsbereich, aus dem die Zusammensetzung des Basisglases ausgewählt wird, das sich für die Beschichtung von Lithiumaluminiumsilikat-Glaskeramiken eignet, enthält:

$SiO_2$ 20 - 82 Gew.-%
$Al_2O_3$ 0 - 20 Gew.-%
$B_2O_3$ 0 - 30 Gew.-%
$R_2O = Li_2O + Na_2O + K_2O$ 0 - 20 Gew.-%
$RO = MgO + CaO + SrO + BaO$ 0 - 20 Gew.-%
$ZnO$ 0 - 10 Gew.-%
$TiO_2 + ZrO_2$ 0 - <5 Gew.-%
$Bi_2O_3$ 0 - 65 Gew.-%
$F$ 0 - 3 Gew.-%

sowie ggf. Farboxide wie $CoO$, $Fe_2O_3$, $NiO$ oder Seltenerdelemente.

Ein weiter bevorzugter Zusammensetzungsbereich enthält:

$SiO_2$ 40 - 80 Gew.-%
$Al_2O_3$ 0 - 20 Gew.-%
$B_2O_3$ 0 - 25 Gew.-%
$R_2O = Li_2O + Na_2O + K_2O$ 2 - 15 Gew.-%
$RO = MgO + CaO + SrO + BaO$ 0 - 15 Gew.-%
$ZnO$ 0 - 6 Gew.-%
$TiO_2 + ZrO_2$ 0 - <5 Gew.-%
$Bi_2O_3$ 0 - 20 Gew.-%
$F$ 0 - 2 Gew.-%

sowie ggf. Farboxide wie $CoO$, $Fe_2O_3$, $NiO$ oder Seltenerdelemente.

Die Alkalien und Erdalkalien können wegen ihrer gleichartigen Eigenschaften in den Gläsern wie angegeben zu $R_2O$ bzw. RO zusammengefasst werden.

Die nachfolgenden Tabellen zeigen verschiedene, weiter bevorzugte Bereiche der bevorzugten Zusammensetzungen für Basisgläser, die sich für die Beschichtung von Glas- und Glaskeramikartikeln eignen.

Tabelle 1: Bevorzugte Zusammensetzungsbereiche von Basisgläsern

| Gew.-% | Glas A | Glas B | Glas C | Glas D | Glas E | Glas F | Glas 6 | Glas H | Glas I |
|---|---|---|---|---|---|---|---|---|---|
| $SiO_2$ | 44-57 | 53-63 | 57-62 | 47-52 | 40-50 | 63-73 | 50-66 | 45-60 | 45-75 |
| $Al_2O_3$ | 5-25 | 15-25 | 5-8 | 2-6 | 9-15 | 0-7 | 0-20 | 6-17 | 1-10 |
| $B_2O_3$ | 0-27 | 15-22 | 18-23 | 17-21 | 10-15 | 12-29 | 0-8 | 0-10 | 10-30 |
| $Li_2O$ | 0-10 | 2-7 | 2-6 | 3-5 | 0-4 | 0-6 | 0-12 | 0-7 | 0-5 |
| $Na_2O$ | 0-10 | 0-1 | 0-1 | 1-5 | 1-4 | 0-8 | 7-15 | 0-7 | 0-10 |
| $K_2O$ | 0-10 | 0-1 | 0-4 | 5-10 | 0-3 | 0-8 | 0-3 | 0-7 | 0-5 |
| $CaO$ | 0-4 | 1-4 | 1-2 | 0-2 | 0-3 | 0-5 | 0-10 | 0-12 | 0-4 |
| $MgO$ | 0-3 | 1-4 | 0-2 | 0-1 | 0-3 | 0,1-5 | 3-8 | 0-9 | 0-4 |
| $BaO$ | 0-4 | 0-1 | 0-2 | 0-2 | 16-24 | 0-5 | 0-15 | 13-27 | 1-10 |
| $SrO$ | 0-4 | 1-4 | 0,5-2 | 0-1 | 0-2 | 0-4 | 0-4 | 0-4 | 0-4 |
| $ZnO$ | 0-15 | 1-4 | 0-2 | 0-3 | 8-15 | 0-15 | 0-5 | 3-17 | 0-20 |
| $TiO_2$ | 0-3 | 0-1 | 0-2 | 0-2 | 0-3 | 0-5 | 0-5 | 0-2 | 0-2 |
| $ZrO_2$ | 0-7 | 1-4 | 2-5 | 0-2 | 0-4 | 0-5 | 0-5 | 0-7 | 0-7 |
| $As_2O_3$ | 0-1 | 0-1 | 0-1 | 0-1 | 0-1 | 0-1 | 0-1 | 0-1 | 0-1 |
| $Sb_2O_3$ | 0-15 | 0-1 | 0-1 | 0-1 | 0-15 | 0-1 | 0-1 | 0-1 | 0-1 |

(fortgesetzt)

| Gew.-% | Glas A | Glas B | Glas C | Glas D | Glas E | Glas F | Glas 6 | Glas H | Glas I |
|---|---|---|---|---|---|---|---|---|---|
| F | 0 - 3 | 0-1 | 0-1 | 0-1 | 0-1 | 0-1 | 0-1 | 0-1 | 0-2 |

| Gew.-% | Glas K | Glas L | Glas M | Glas N | | Glas O | | Glas P | |
|---|---|---|---|---|---|---|---|---|---|
| $SiO_2$ | 25-55 | 35-65 | 30-54 | 6-20 | | 6-15 | | 45-65 | |
| $Al_2O_3$ | 3-18 | - | 0-17,5 | 0-5 | | - | | 0-15 | |
| $B_2O_3$ | 5-25 | - | 13-28 | 20-38 | | 20-28 | | 5-30 | |
| $Li_2O$ | 0-12 | 0-6 | 3-6 | - | | - | | 0-10 | |
| $Na_2O$ | 3-18 | 0-6 | 4-10 | - | | - | | 0-10 | |
| $K_2O$ | 3-18 | 0-6 | 0-2 | - | | - | | 0-10 | |
| CaO | 3-17 | 0-12 | 0-6 | - | | - | | 0-5 | |
| MgO | 0-10 | 0-12 | 0-4 | - | | - | | 0-5 | |
| BaO | 0-12 | 0-38 | - | - | | - | | 0-20 | |
| SrO | - | 0-16 | 0-4 | - | | - | | 0-16 | |
| ZnO | - | 17,5-38 | 3-13 | 35-70 | | 58-70 | | 0-35 | |
| $TiO_2$ | 0-5 | - | 0-2 | 0-5 | | - | | 0-5 | |
| $ZrO_2$ | 0-3 | - | 0-2 | 0-5 | | - | | 0-5 | |
| $Bi_2O_3$ | - | - | - | 0-20 | | - | | 0-20 | |
| CoO | - | - | - | 0-5 | | - | | - | |
| $Fe_2O_3$ | - | - | - | 0-5 | | - | | - | |
| MnO | - | - | - | 0-10 | | 0,5-1 | | - | |
| $CeO_2$ | - | - | - | - | | 0-3 | | - | |
| F | - | - | 0-3.3 | 0-6 | | - | | - | |

Vorzugsweise werden Glaspulver verwendet, die auf eine mittlere Korngröße d50 von weniger als 4 $\mu$m, bevorzugt weniger als 2,5 $\mu$m aufgemahlen sind. Besonders bevorzugt beträgt die mittlere Korngröße weniger als 2 $\mu$m. Mit niedrigeren Werten der mittleren Korngröße verbessert sich das Glattfließen der Glaspulver beim Einbrand der Beschichtung, Kleinere Werte als 0,5 $\mu$m sind aus wirtschaftlichen Gründen, und weil die Tendenz zur Bildung von Agglomerate zunimmt, ungünstig. Für Glaspulver, die beim Tintenstrahldrucken eingesetzt werden, sind zum Teil auch mittlere Korngrößen darunter bis zu 0,2 $\mu$m vorteilhaft. Der $d_{90}$ Wert sollte kleiner als 5 $\mu$m, bevorzugt kleiner als 4 $\mu$m und besonders bevorzugt kleiner als 3 $\mu$m sein. Für Glaspulver die beim Tintenstrahldrucken eingesetzt werden, ist ein Wert < 1 $\mu$m vorteilhaft. Um die Spannungen zwischen Glaskeramikartikel und Beschichtung zu vermindern, wird nach dem erfindungsgemäßen Verfahren bevorzugt eine Menge an schichtbildendem Material aufgebracht, die nach dem Einbrand eine Schichtdicke von weniger als 20 $\mu$m, bevorzugt weniger als 10 $\mu$m und besonders bevorzugt weniger als 7 $\mu$m ergibt. Dadurch sind die Haftfestigkeit der Beschichtung und die Festigkeit des Artikels erhöht.

Bevorzugt wird das Substrat in Scheibenform verwendet, da diese Form für die genannten Verwendungen von Vorteil ist. Die Dicke der Scheibe beträgt bevorzugt 0,2 - 10 mm.

Die Beschichtung wird nach dem Aufbringen eingebrannt, vorzugsweise in einem Temperaturbereich von 620°C bis 1200 °C, und weiter bevorzugt von 800 °C bis 1000 °C. Die Zeitdauer in diesem Bereich beträgt vorzugsweise 3 Minuten bis 3 Stunden. Die angegebenen Temperaturen und Zeiten sind für das Auskristallisieren der Farbkörper vorteilhaft.

Das Erwärmen und der Einbrand der Beschichtungen erfolgen bevorzugt in einem Rollenofen. Die Seite mit der Beschichtung liegt oben und die Scheibe wird entweder direkt auf den Rollen oder auf einer ebenen Unterlagsplatte liegend im Rollenofen weiter transportiert.

Der Glaskeramikartikel kann nach dem vorstehend beschriebenen, erfindungsgemäßen Verfahren erhalten werden.

Es handelt sich hierbei um einen Glaskeramikartikel mit einer farbigen glasbasierten Beschichtung, umfassend ein Substrat aus einer LAS-Glaskeramik, die über eine niedrige thermische Ausdehnung im Bereich von 20 °C bis 300 °C von weniger als 2 • 10⁻⁶/K verfügt, und wobei die Beschichtung bevorzugt abgesehen von unvermeidbaren Verunreinigungen frei ist von Blei und Cadmium.

Das LAS-Glaskeramiksubstrat weist vorzugsweise Hochquarz- und/oder Keatit-Mischkristallen als Hauptkristallphase auf.

Ferner ist auch hierbei bevorzugt die Beschichtung, abgesehen von unvermeidbaren Verunreinigungen, frei von Blei und Cadmium, sowie bevorzugt, bis auf unvermeidbare Verunreinigungen, frei von Hg sowie Cr$^{VI}$.

Für die verbesserten Gebrauchseigenschaften sollte die Oberfläche des Artikels mit der glasbasierten Beschichtung bevorzugt über eine geringe Rauigkeit verfügen. Eine summarische Aussage über die Rauigkeit gibt der Ra-Wert (DIN 4768). Die Beschichtung soll über eine geringe Rauigkeit von Ra < 0,4 $\mu$m, bevorzugt < 0,3 $\mu$m verfügen. Der Ra-Wert ist definitionsgemäß die mittlere arithmetische Abweichung der Höhenmesspunkte von der mittleren Höhenebene. Der Ra-Wert sagt aber nichts darüber aus, ob die Mikrostruktur der Oberfläche eher rund und kuppig oder kantig und scharf ist. Ein spezieller Rauhigkeitswert, der etwas über die Art der Oberflächenstruktur aussagt, ist die sogenannte Skewness Rsk. Der Skewness-Wert sagt etwas über die Symmetrie der Oberflächenprofile. Niedrige und negative Werte sind charakteristisch für kuppig-wellige Oberflächen, positive Werte für spitz-zackige. Rsk- Werte von unter 1, bevorzugt unter 0,25 $\mu$m sind bevorzugt.

Die aufgeführten geringen Rauhigkeitswerte der Beschichtung sind für einen verbesserten Glanz, ein verbessertes Reinigungsverhalten und bei Kochflächen für einen geringeren Topfabrieb von Vorteil.

Bei Kochflächen mit üblicher Email-Dekorierung macht sich deren Rauigkeit beim Verschieben von Töpfen durch die entstehenden Geräusche störend bemerkbar. Besonders bei Kochflächen mit variablen Kochzonen, meist mit Induktionsbeheizung, ist dies ein Problem. Durch die frei wählbaren Kochpositionen kommt es im praktischen Gebrauch zu häufigerem Verschieben des Kochgeschirrs auf der gesamten Kochfläche.

Die Entstehung dieser Topfgeräusche und deren Empfindung, d.h. wie störend das Geräusch empfunden wird, ist ein komplexer Vorgang.

Die psychoakustischen Eigenschaften der beschichteten Glaskeramikartikel, d.h. das menschliche Geräuschempfinden beim Verschieben eines Kochgeschirrs auf der Oberfläche werden durch zwei Parameter beschrieben, die Schärfe und die Lautheit. Die Bestimmung des Parameters Schärfe ist beschrieben in der DIN 45692:2009-08. Ein hoher Schärfewert und eine hohe Lautheit werden allgemein als unangenehm empfunden. Die akustische Bestimmung der Lautheit beschreibt die DIN 45631/A1:2010-03.

Überraschenderweise hat der Belegungsgrad (Flächenbelegung), d.h. wieviel Flächen-% der Substratoberfläche mit Dekor versehen ist, im Bereich von 3 % bis 100 % keinen starken Einfluss auf die akustischen Eigenschaften. Es überwiegt der Einfluss der spezielle Mikrorauigkeiten der Beschichtung bzw. des Dekors mit dem der Glaskeramikartikel versehen ist.

In aufwendigen Versuchsreihen wurden verschiedene mittels Weißlicht-Interferenzmikroskopie gemessene Rauhigkeitswerte und die psychoakustisch gemessenen Eigenschaften Schärfe und Lautheit gegenübergestellt. Es stellte sich heraus, dass der gemessene Ra-Wert und der Rsk-Wert nicht mit den für ein störendes Hörempfinden wesentlichen Kennwerten Schärfe und Lautheit korrelieren. Daher ist stattdessen eine differenziertere Beschreibung der Topografie erforderlich. Zur Ermittlung der neuartigen Rauheitsparameter, die mit den psychoakustischen Werten korrelieren, wurde die Weißlicht-Interferenzmikroskopie eingesetzt, um Topografiewerte auf Flächen von 3,1 mm x 3,1 mm durch stitching (laterale Auflösung 0,8 $\mu$m mit Aneinanderreihung individueller (kleinerer) Topografie-Aufnahmen) zu bestimmen.

$$PSD_{1D,y}(f_x) = \lim_{L \to \infty} \frac{1}{L} \left| \int_{-L/2}^{+L/2} z(x,y) \exp(-2\pi i f_x x) \, dx \right|^2$$

$$PSD_{1D,x}(f_y) = \lim_{L \to \infty} \frac{1}{L} \left| \int_{-L/2}^{+L/2} z(x,y) \exp(-2\pi i f_y y) \, dy \right|^2$$

Aus den ermittelten Topografiedaten ergeben sich die sog. Power Spectral Density-Funktionen (PSD), (beschrieben z.B. in der Norm ISO 10110-8:2010(E)). Wenn die Topographiedaten ein Höhenprofil beschreiben mit z = z(x,y), dann sind die (zeilen- bzw. spaltenweisen) PSD-Funktionen wie folgt definiert:

Da die Rauheitswerte der Oberfläche im wesentlichen stochastischer Natur sind, ergeben sich für die $PSD_{1D,x}$ und die $PSD_{1D,y}$ im wesentlichen die gleichen Werte, so dass sich durch Mittelwertbildung über die $3900 \pm 20$ Zeilen sowie die $3900 \pm 20$ Spalten der Messung gemittelte Werte $\overline{PSD_{1D,x}(f_y)}$ und $\overline{PSD_{1D,y}(f_x)}$ der PSD ergeben, die sich wiederum zu einem Gesamt-Mittelwert $PSD_{1D}(f) = (\overline{PSD_{1D,x}(f)} + \overline{PSD_{1D,y}(f)})/2$ zusammenfassen lassen.

Aufgrund des Parsevalschen Theorems ergibt sich für die rms-Rauheit der Topographie folgender Zusammenhang mit der PSD-Funktion:

$$rms^2 = \int\limits_{0}^{+\infty} PSD_{1D}(f)df$$

Entsprechend lassen sich "Rauheitsanteile" für beliebige Frequenzbereiche angeben (im Ortsfrequenzraum, wobei die Ortsfrequenz dem Kehrwert einer entsprechenden Wellenlänge entspricht: fx ~ 1/Ax):

$$rms(f_1...f_2)^2 = \int\limits_{f_1}^{f_2} PSD_{1D}(f)df$$

Die Gesamtrauheit rms lässt sich aus den "Rauheitsanteilen" berechnen:

$$rms^2 = rms(0...f_1)^2 + rms(f_1...f_2)^2 + rms(f_2...f_3)^2 ... + rms(f_N...\infty)^2$$

Da die unbeschichtete Substrat-Oberfläche bereits eine unregelmäßige Rauheit im längerwelligen Bereich aufweist, wurden längerwellige Rauheitskomponenten für die Analyse zunächst herausgefiltert (Frequenz < 1mm-1). Von den resultierenden Topografien kann über einen weiten Spektralbereich die spektrale Dichte der Rauheit (power spectral density, PSD) betrachtet werden - gemittelt über x- und y-Richtung. Sollten die dekorierten Flächen kleiner sein als die in der obigen Auswertung beschriebenen Flächen (3,1 mm x 3,1 mm), so können ersatzweise auch Werte verwendet werden, die auf kleineren Flächen ermittelt wurden. Wichtig hierbei ist aber, die Mittelung der PSD-Funktion über eine statistische Gesamtheit durchzuführen, die der oben beschriebenen äquivalent ist (d.h. Mittelung über mindestens 2 x 3900 = 7800 Linienprofile).

Die Rauheitsanteile zwischen 10 mm$^{-1}$ bis 20 mm$^{-1}$ und zwischen 20 mm$^{-1}$ bis 50 mm$^{-1}$, d.h. rms (10 mm$^{-1}$ bis 20 mm$^{-1}$) und rms (20 mm$^{-1}$ bis 50 mm$^{-1}$) lassen sich mit den Werten für die Hörempfindung Schärfe korrelieren. Durch die Optimierung dieser Rauheitsparameter lässt sich die Beschichtung bzw. das Dekor hinsichtlich der Hörempfindung Schärfe positiv beeinflussen.

In bevorzugter Ausführung ist der erfindungsgemäße Glaskeramikartikel gekennzeichnet durch eine Beschichtung oder Dekorierung mit einem mit Weißlicht-Interferenzmikroskopie bestimmten Rauheitsanteil rms im Bereich von 10 mm$^{-1}$ bis 20 mm$^{-1}$ kleiner als 0,1 $\mu$m ($rms_{10\,mm-1...\,20\,mm-1} < 0,1\,\mu$m) und einen Rauheitsanteil rms im Bereich von 20 mm$^{-1}$ bis 50 mm$^{-1}$ kleiner als 0,045 $\mu$m ($rms_{20\,mm-1...\,50\,mm-1} < 0,045\,\mu$m).

Der Rauheitsanteil rms im Bereich von 20 mm$^{-1}$ bis 50 mm$^{-1}$ kann in Einzelfällen bis zu 0,065 $\mu$m betragen. Der dekorierte Artikel muss dann einer gesonderten Prüfung auf die Eigenschaften unterzogen werden, ob er noch den erweiterten Anforderungen an die Geräuschoptimierung entspricht.

Weiter bevorzugt sind Rauheitsanteile rms im Bereich von 10 mm$^{-1}$ bis 20 mm$^{-1}$ kleiner 0,05 $\mu$m und im Bereich von 20 mm$^{-1}$ bis 50 mm$^{-1}$ kleiner als 0,03 $\mu$m.

Besonders bevorzugt sind Rauheitsanteile rms im Bereich von 10 mm-1 bis 20 mm$^{-1}$ kleiner 0,02 $\mu$m und im Bereich von 20 mm$^{-1}$ bis 50 mm$^{-1}$ kleiner als 0,015 $\mu$m.

Die besondere Mikrostruktur des Glaskeramikartikels mit den auskristallisierten anorganischen Farbkörpern verleiht diesem neue Möglichkeiten des Designs und der Gestaltung wie bereits beschrieben.

Die Beschichtung besitzt vorzugsweise eine umweltfreundliche Zusammensetzung und ist technisch frei von Pb, Cd und auch Hg sowie CrVI, d.h. solche Verbindungen werden nicht absichtlich zugesetzt und der Gehalt dieser Komponenten ist üblicherweise < 1000 ppm und bevorzugt weniger als 500 ppm.

Bevorzugt ist die farbige glasbasierte Beschichtung so ausgebildet, dass sie auf dem Glaskeramikartikel deutlich wahrnehmbar ist. Das heißt die Farbe der Beschichtung soll sich gemessen in Remission im CIELAB Farbsystem (DIN 5033) mindestens um den Farbabstand $\Delta E$ von 1 von der des unbeschichteten Substrates unterscheiden. Bevorzugt soll der Farbabstand mindestens 2 und besonders bevorzugt mindestens 5 betragen.

Es ist daher von Vorteil, wenn die auskristallisierenden Farbkörper aus Kristallen bestehen, deren Brechungsindex sich deutlich von dem der Glasmatrix in der Beschichtung unterscheiden. Weiterhin ist es von Vorteil, wenn das Wirtsgitter dieser Kristalle zur Aufnahme von anderen Farboxiden befähigt ist, mit denen die Farbe gesteuert werden kann. Bevorzugte Kristallstrukturen sind solche des Typs Rutil, Spinell, Zirkon, Baddeleyit, Kassiterit, Ceroxid, Korund, Olivin, Sphen, Granat, Willemit, Periklas. Die Kristalle können auch als Mischkristalle aufgebaut sein, was zum Beispiel bei den Spinellen sehr verbreitet ist. Besonders bevorzugt, weil gut auskristallisierbar, sind Kristallstrukturen des Typs Rutil, Spinell, Zirkon, Baddeleyit, Kassiterit, Ceroxid.

Die auskristallisierten anorganischen Farbkörper haben bevorzugt eine mittlere Größe von 0,05 - 2 $\mu$m. Bei mittleren Größen < 0,05 $\mu$m ist die Farbwirkung verringert. Übersteigt die mittlere Größe einen Wert von 2 $\mu$m, so ist dies aufgrund der geringen Schichtdicken der Beschichtung auf dem Glaskeramikartikel für die angestrebten niedrigen Rauhigkeitswerte von Nachteil. Um die Farbwirkung zu verbessern, beträgt die mittlere Größe der Farbkörper bevorzugt mindestens 0,2 $\mu$m. Für eine weiter verbesserte Glattheit der Beschichtung liegt die mittlere Größe bevorzugt unter 1,2 $\mu$m.

Vorzugsweise hat der erfindungsgemäße Glaskeramikartikel die Form einer Scheibe, weil diese Geometrie für die meisten Verwendungen im Innen- und Außenbereich dominiert. Solche Scheiben werden technologisch meist mit den Formgebungsverfahren Walzen oder Floaten aus der Schmelze hergestellt. In ihren Abmessungen orientieren sich die Substrate an der Verwendung und den Möglichkeiten der großtechnischen Herstellverfahren. So werden zum Beispiel in der Architektur transparente Glaskeramikscheiben in Brandschutzverglasungen eingesetzt, die sich an den Stockwerkshöhen von ca. 3 m orientieren, bei Breiten von beispielsweise 2 m. Solche Abmessungen sind über den Floatprozess darstellbar. Die Dicken dieser Scheiben liegen meist im Bereich 3 - 6 mm. Die Scheiben können auch im Laminatverbund mit Kunststoffen für Verglasungen eingesetzt werden. Im Innenbereich als konstruktive Bestandteile in Küchenmöbeln oder -geräten orientieren sich die Abmessungen am Küchen-Zeilenmaß von 50 oder 60 cm Breite. Dies betrifft z. B. Kochflächen oder Sichtscheiben in Küchengeräten wie z. B. Kochflächen, Backofentüren, Kaminscheiben. Die Substrate können auch dreidimensional verformt sein und in verschiedenen Geometrien vorliegen oder mit Markierungen versehen sein. Für diese Modifizierungen stehen verschiedene Technologien (Pressen, Biegen, Senken, Lasern, Verformung mit Infrarotstrahlung, Wasserstrahlen) zur Verfügung. Bevorzugte Dicken für die Verwendungen sind 0,2 - 10 mm, und besonders bevorzugt 2 - 6 mm.

Als Beispiele für die verschiedenen Verwendungen bietet die Firma SCHOTT AG Glaskeramikprodukte in Form von Scheiben an, die erfindungsgemäß vorteilhaft beschichtet oder dekoriert werden können. Die den Glaskeramikprodukten zugrunde liegenden Zusammensetzungen und geeignete Keramisierungen sind in den folgenden Schriften offenbart:

(a) CERAN CLEARTRANS® (vgl. EP 1837314 A1),

(b) CERAN CLEARTRANSeco® (vgl. DE 102012202697 A1),
beides transparente Glaskeramiken für Kochflächen mit blickdichter Unterseitenbeschichtung;

(c) CERAN HIGHTRANSeco® (vgl. DE 102008050263 A1), transparente eingefärbte Glaskeramik für Kochflächen;

(d) CERAN ARCTICFIRE® (vgl. EP 1170264 A1), transluzente Glaskeramik für Kochflächen, auch in verschiedenen Transluzenzstufen sowie opak und eingefärbt darstellbar.

(e) ROBAX® (vgl. EP 1837312 A1), transparente Glaskeramik für Kaminscheiben und Backofenscheiben

(f) PYRAN PLATINUM® (vgl. EP 1837313 A1), transparente Glaskeramik für Brandschutzverglasungen

(g) NEXTREMATM (vgl. Produktinformation der SCHOTT AG, 90557 ENGLISH 05120.8 ali/ben), transparente, transluzente oder opake Glaskeramiken, auch eingefärbt, für Verwendungen nach besonderen Kundenanforderungen, wie z. B. Gehäusebestandteile von elektronischen Geräten, Brennhilfsmittel oder Ofenauskleidungen.

Bei der vorliegenden Erfindung ist in der Regel eine Seite der Scheibe entsprechend der Erfindung beschichtet. Bei Kochflächen ist insbesondere die Oberseite entsprechend beschichtet oder dekoriert um die erfindungsgemäßen Vorteile niedrigerer Rauigkeitswerte für die Gebrauchseigenschaften, wie Abrieb, Reinigungsverhalten und Topfgeräusche umzusetzen. Es ist auch möglich, beide Seiten erfindungsgemäß zu beschichten.

In bevorzugter Ausführung ist der scheibenförmige Glaskeramikartikel mit einem geräuschoptimierten Dekor auf Glasbasis beschichtet, mit einer Schärfe < 3 acum und/oder einer Lautheit < 7 sone, gemessen nach DIN 45631/A1:2010-03 und DIN 45692:2009-08. Die Messung wird auf dem mit einem Dekor von mindestens 3 % Flächenbelegungsgrad beschichteten Substrat mit den Außenmaßen 500 x 550 mm, unter Verwendung eines neuwertigen Stahlemailtopfes mit emailliertem Boden der Firma Silit, des Typs Silargan Bratentopf 20 cm Accento, mit einem Durchmesser des Stellbodens von 17 cm und einem innen aufgenommenen Gewicht der Masse von 1 kg, unter Verschieben des Topfes mit einer Geschwindigkeit von 0,08 m/s vorgenommen. Es hat sich gezeigt, dass mit einem derartig beschichteten Glaskeramikartikel eine Kochfläche bereitgestellt werden kann, bei der beim Verschieben von Kochgeschirren mit üblichen Geschwindigkeiten eine Geräuschoptimierung erzielbar ist, die vom Benutzer als angenehm empfunden wird. Bevorzugt ist die Lautheit < 4,5 sone und/oder die Schärfe < 2,6 acum. In bevorzugter Weiterbildung der Erfindung ist sowohl die Schärfe < 3 acum als auch die Lautheit < 7 sone.

Auch in einem vereinfachten Versuchsaufbau mit kleineren Musterplatten gleicher Geometrie und Dekorierung lassen sich die Topfgeräusche subjektiv im Vergleich zueinander bewerten.

Die andere Seite der Scheibe wird entsprechend dem Stand der Technik für das Produkt ausgestaltet. So wird zum Beispiel bei transparenten Glaskeramiken für Kochflächen die Unterseite mit einer blickdichten Beschichtung versehen, die aus einer oder mehreren Schichten, nebeneinander und/oder auch übereinander, bestehen kann, um die Durchsicht auf die technischen Einbauten zu verhindern. Diese kann aus organischen, Sol-Gel, Silikon, Email, Sputter metalloxidischen oder metallischen Verbindungen aufgebaut sein. Die Beschichtung kann vollflächig sein. Es ist eher üblich, zu strukturieren, d.h. strukturierte Dekore wie Raster, Muster, Schriftzeichen, Symbole etc. als auch Bereiche für Anzeigen und Displays vorzusehen. Unter den strukturierten Bereichen lassen sich beispielsweise Anzeigeelemente oder andere technische Vorrichtungen in das System integrieren. Die Anzeigeelemente können aus mono- und polychromatischen Lichtquellen meist LEDs bestehen und in verschiedenen Farben wie blau, grün, gelb, orange, rot und weiß leuchten. Auch farbige Bildschirme/Displays sind möglich.

Vorzugsweise werden die mit dem erfindungsgemäßen Verfahren hergestellten Glaskeramikartikel als Blenden, Front- oder Sichtscheiben in Küchengeräten, als Kochflächen bzw. Warmhalteplatten oder Sichtscheiben in einem Kamin oder Küchenofen sowie in Laborgeräten oder Pharmaverpackungsmitteln verwendet. Mehrere Typen von Kochflächen, wie transparent eingefärbte, d.h. z.B.in Aufsicht schwarz erscheinende Kochflächen, opake, transluzente, als auch transparente Kochflächen mit blickdichter Unterseitenbeschichtung, werden vorteilhaft bedient.

Besonders bevorzugt finden bei Kochflächen solche mit variablen Heizzonen Verwendung. Wegen der technischen Umsetzbarkeit sind es besonders Induktionskochflächen mit variablen Kochzonen. Diese Beheizungsart lässt sich über mehrere unter der Kochfläche angeordnete Induktionsspulen wirtschaftlich umsetzen.

Bei weiteren bevorzugten Verwendungen des Glaskeramikartikels als Kaminscheibe oder Backofenscheiben ist die Erfindung für das Reinigungsverhalten von Vorteil. Bei Sichtscheiben für Küchenofen werden insbesondere solche mit Pyrolysereinigung vorteilhaft bedient.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:

Fig. 1 eine Gefügeaufnahme von Substrat (a) im Querschnitt mit Beschichtung von Glas 7 im Primäreinbrand und
Fig. 2 eine Lithografie des Siebdrucks der Musterplatten der Beispiele.

BEISPIELE

Für die Basisgläser sind in Tabelle 3 Zusammensetzungen und Eigenschaften wie Dichte, Transformationstemperatur Tg, Erweichungstemperatur Ew, Verarbeitungstemperatur Va und die thermische Ausdehnung zwischen 20 °C und 300 °C aufgeführt. Um die erfindungsgemäßen Glaspulver zu erhalten, werden die Basisgläser zusammen mit Komponenten für die Bildung auskristallisierbarer Farbkörper und optional Dotierungen gemäß Tabelle 4 geschmolzen.

Zur Herstellung des Glaspulvers für das schichtbildende Material wurden die Glaszusammensetzungen aus in der Glasindustrie üblichen Rohstoffen bei Temperaturen von ca. 1400 °C, 4 Stunden in Platintiegeln mit einem Schmelzvolumen 1,3 l geschmolzen und durch Rühren homogenisiert. Tabelle 4 zeigt die Zusammensetzungen und Eigenschaften der erhaltenen Glaspulver. Teilweise wurden auch handelsübliche Pigmente als Rohstoffe bei der Schmelze eingesetzt und mit eingeschmolzen. Dies wurde insbesondere bei komplex aufgebauten Spinell-Mischkristallen für dunkle Färbungen wie bei den Glaspulvern 15, 16 und 18durchgeführt. Die Glasschmelzen werden zwischen wassergekühlten Edelstahlwalzen abgeschreckt und die erhaltenen Glasstücke werden weiter auf mittlere Korngrößen d50 von weniger als 2,5 $\mu$m und d90 Werte von weniger als 5 $\mu$m aufgemahlen. Die Messungen der Korngrößenverteilungen an den Pulvern erfolgten mit einem CILAS 920 Laser Granulometer der Firma Quantachrome (gemessene Werte siehe Tabelle 4). Die Glasstücke wurden vor der Mahlung visuell begutachtet, um sicherzustellen, dass keine störenden kristallinen Schmelzrelikte oder bereits auskristallisierte Farbkörper enthalten sind.

Tabelle 4 zeigt die Zusammensetzungen und Eigenschaften der in den schichtbildenden Materialien enthaltenen erfindungsgemäßen Glaspulver. Dabei wurden die angegebenen Massenanteile der Basisgläser und der Komponenten zur Erzeugung der auskristallisierenden Farbkörper gemeinsam geschmolzen. In einigen Fällen wurden bei der Schmelze zusätzlich Verbindungen zur Dotierung der auskristallisierenden Farbkörper zugegeben um den Farbort einzustellen. An einigen Gläsern wurden die Transformationstemperatur $T_g$, die thermische Ausdehnung im Bereich von 20 °C bis 300 °C, sowie die Dichte gemessen. Die Erweichungstemperatur $E_w$ kann methodisch bedingt wegen der Kristallisationsneigung der Gläser in diesem Temperaturbereich nicht bestimmt werden. Als Orientierung kann hier die Erweichungstemperatur der Basisgläser aus Tab. 3 dienen.

In Tabelle 5 sind Beispiele für erfindungsgemäß beschichtete Glaskeramikartikel sowie Vergleichsbeispiele mit ihren Herstellparametern sowie Eigenschaften dargestellt. Bei den Substratmaterialien wurden zum Beschichten Scheiben aus kristallisierbaren Lithiumaluminiumsilikat-Gläsern und bereits kristallisierte Glaskeramikscheiben verwendet. Sie sind aus den genannten kristallisierbaren Gläsern für die Glaskeramiken (a) bis (g) oder beim Sekundäreinbrand aus den Glaskeramiken selbst ausgewählt. Die Rezepturen der schichtbildenden Materialien sind in Tabelle 5 angegeben. Bei dem Beispiel 18 wurde ein arteigenes Nanopigment des Spinell-Typs als Keim zugegeben (mittlere Korngröße 40 nm).

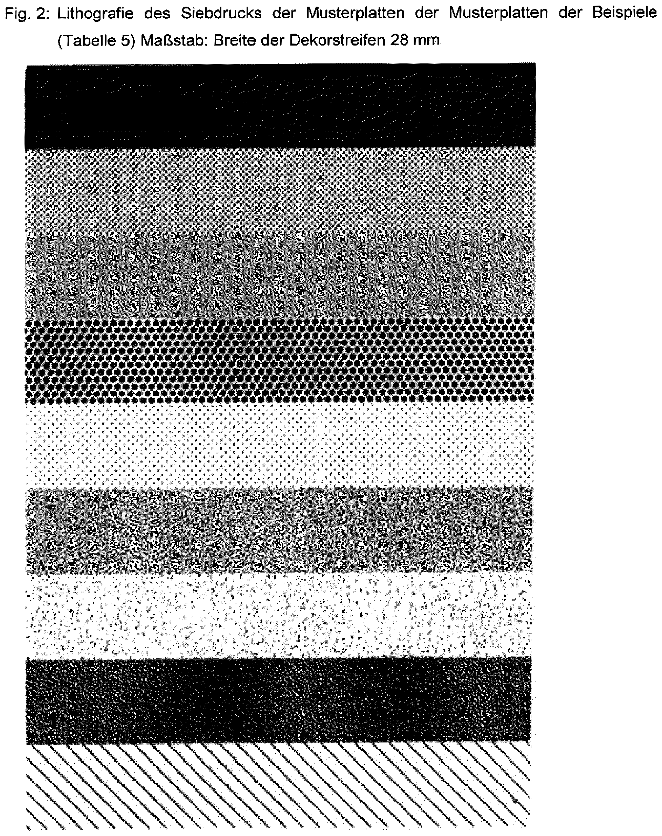

Die aufgeführten Substratmaterialien wurden als Scheiben der Dimensionen 380 $\times$ 250 $\times$ 4 mm$^3$ für die Beschichtungen präpariert. Diese Größe eignet sich sowohl für Einbrände in Labor- als auch in Fertigungsöfen. Die Pulver für die Beschichtungen wurden gemäß Tabelle 5 aus den Glaspulvern und fallweise mit Zusätzen von kristallinen Nanopimenten gemischt und mit Siebdrucköl mit einem Anpastverhältnis von 10 Masseanteilen Pulver zu 12 Masseanteilen Öl versetzt. Durch Rühren in einem Dispermat wurde die Paste gemischt und in einem Dreiwalzenstuhl homogenisiert. Das Anpastverhältnis und das Siebgewebe bedingen die Schichtdicke beim Siebdruck. Die Substrate wurden mit einem Sieb der Gewebefeinheit 100 und der Lithografie gemäß Figur 2 bedruckt und an Luft bei Raumtemperatur getrocknet. Ein ca. 3 cm breiter Rand des Substrates blieb unbedruckt.

Die Einbrände und die Keramisierung für die Beispiele 1 bis 20 und die Vergleichsbeispiele 23, 24 erfolgten mit dem in der DE 102012202697 A1 angegebenen Keramisierungsprogramm 2 im Fertigungs-Rollenofen. Beim Einbrand wurde eine Unterlagsplatte verwendet. Beispiel 20 wurde im Sekundäreinbrand eingebrannt.

Beim Sekundäreinbrand der Beschichtung von Beispiel 21 wurde das Programm von Beispiel 3 aus der EP 1170264 A1 zur Herstellung einer transluzenten Glaskeramik für Kochflächen, Typ (d), verwendet (Farbwerte des Substrates L*, a*, b* = 87,5, -2,4, -2,1). Bei Beispiel 22 wurde das Programm modifiziert, indem die Maximaltemperatur auf 1120 °C erhöht wurde (Farbwerte 94,2, -0,5, 0,4). Die restlichen Parameter des Programms blieben unverändert. Mit diesem Programm wurde eine opake Glaskeramik erzeugt.

Tabelle 5 zeigt die nach dem Einbrand erhaltenen Schichtdicken und die hinsichtlich Rauigkeit gemessenen Oberflächenstrukturen der Schichten.

Die Rauigkeitswerte der Schichten wurden mit einem Weißlichtinterferometer der Firma Zygo Corporation, Typ NewView 200 CHR bestimmt. Zur Auswertung wurde die 32-bit Software MetroPro Version 8.3.5 unter Windows XP SP 3 verwendet. Die Mess-/Auswerteparameter sind wie folgt festgelegt:

- optische Parameter: 50x-Objektiv, Zoom-Faktor 0,5x, Kamera: 320 x 200 Bildpunkte -> Auflösung 0,8 $\mu$m,

- Zur Ermittlung der Topografiewerte der Oberflächen auf einer Fläche von 3,1 mm x 3,1 mm wurde so genanntes "Stitching" verwendet (Aneinanderreihung individidueller (kleinerer) Topografie-Aufnahmen), und zwar mit den nachfolgenden Parametern: Cols 15, Rows 20, Overlap 20%. Hieraus ergeben sich Topographiedaten mit 3900 $\pm$ 20 Zeilen und Spalten.

In der Tab. 5 sind auch die gemessenen Farben der Beschichtungen im CIELAB Farbsystem angegeben und der Farbabstand $\Delta$E zu dem Farbton an benachbarten Positionen des unbeschichteten Substrats berechnet. Die Farbmessung in Remission wurden mit dem Gerät Mercury 2000 der Firma Datacolor, Lichtart D65, Beobachtungswinkel 10° bestimmt. Es wird an vollflächig dekorierten Bereichen des Substrats gemessen. Da bei den transparenten Substraten die Farbe auch vom Hintergrund bzw. der Farbe der Unterseitenbeschichtung abhängt, wurde in diesen Fällen sowohl mit weißen als auch schwarzen Hintergrund gemessen. In der Tab. 5 entspricht der schwarze Hintergrund dem ersten Wert.

Die rechten Spalten in Tab. 5 zeigen die gemessenen Werte für die Rauigkeiten und Farbtöne der unbeschichteten Glaskeramiksubstrate.

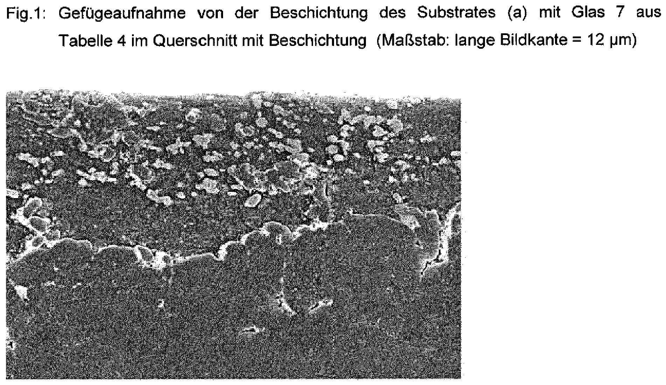

Auch wurden aus Elektronenmikroskop-Aufnahmen die Mikrostruktur der Schichten quer an Bruchkanten bestimmt. Figur 1 zeigt eine Elektronenmikroskop-Aufnahme der Bruchkante des Substrats (a) mit der im Primäreinbrand eingebrannten Beschichtung von Glas 7 aus Tabelle 4.

Die gemäß Figur 2 dekorierten Glaskeramikscheiben wurden in einem vereinfachten Versuchsaufbau bezüglich ihrer Topfgeräusche relativ zueinander bewertet. Dabei wurde der bereits beschriebene Stahlemailtopf (Innengewicht 1 kg) mit einer Geschwindigkeit von 0,08 m/s linear in Längsrichtung der Scheibe hin und her bewegt. Die Messungen werden auf einem Labortisch mit Filzauflage durchgeführt. Die Bewertung wie störend das Topgeräusch empfunden wird beginnt auf einer Skala von 0 (unbeschichtete Glaskeramikscheibe) über 1 (sehr geringe störende Tropfgeräusche) bis zu 6 (extrem störendes Geräusch). Werte ab drei werden bereits als nachteilig empfunden. Die so ermittelten Werte sind in Tab. 5 eingetragen und zeigen die Vorteile der erfindungsgemäßen Beispiele gegenüber den Vergleichsbeispielen 23, 24 mit Pigmentzugabe.

Für die ausgewählten Beispiele 5 und 6 wurde eine aufwändige Messung der psychoakustischen Parameter durchgeführt. Kochflächen mit den Außenma-ßen 500 mm x 550 mm und der Dicke 4 mm, dekoriert mit Streifenmuster mit 3, 10, 15, 50 % Flächenbelegungsgrad, wurden auf einen gummierten Metallrahmen mit gleichem Außenmaß aufgelegt. Die Ausführung des Metallrahmens und der Gummierung folgt dabei im Wesentlichen den Ausführungen zur Halteeinrichtung beispielsweise der DIN 52306. Der Rahmen und die Platte werden dabei möglichst von weiteren Halteeinrichtungen bezüglich akustischer Schwingungen entkoppelt, z.B. durch Filzauflagen.

Ein neuwertiger Stahlemailtopf mit emailliertem Boden der Fa. Silit, Silargan Bratentopf 20 cm Accento mit Durchmesser des Stellbodens von 17 cm, wird durch ein innen haftendes Gewicht mit einer Masse von 1 kg aus metallischem Werkstoff zusätzlich beschwert. Neuwertig bedeutet, dass der Topf weniger als 50 Prüfzyklen des nachfolgenden beschriebenen Prüfverfahrens absolviert hat. Der Topf wird ohne Eigenrotation kreisförmig über die dekorierte Kochfläche geführt, wobei der Kreisradius, gemessen vom Kreismittelpunkt bis zum Topfbodenmittelpunkt 26 mm beträgt. Die Frequenz der Kreisbewegung beträgt standardmäßig 0,5 Hz. Das entspricht Geschwindigkeiten von ca. 0,08 m/s, wie sie auch im Alltag der Benutzung einer Kochfläche typischerweise auftreten. Die Geräuschaufnahme erfolgt gemäß der zitierten Normen, wobei die Pegelaufnahme mit einem Mikrofon erfolgt, das 700 mm lotrecht oberhalb der Kochflächenmitte aufgehängt ist. Zur Auswertung werden Geräuschaufnahmen mit einer durchgängigen Aufnahmedauer von 10 s verwendet, Der gesamte Versuchsaufbau befindet sich dabei in einem schallisolierten und schallgedämmten Raum.

Dabei wurden Lautheit und Schärfe mit 4,2 sone sowie 2,3 acum ge- , messen (Beispiel 5) bzw. mit 4,4 sone sowie 2,4 acum (Beispiel 6).

Tabelle 2: Beispiele für auskristallisierbare anorganische Farbkörper, Kristallstrukturen und Zusammensetzungen mit Dotierungen

| Kristallstruktur | System | Farbe |
|---|---|---|
| Spinell | Co-Al-Oxid | blau |
| Spinell | Co-Ni-Mn-Fe-Cr-Oxid | schwarz bis braun |
| Spinell | Co-Zn-Al-Cr-Oxid | blau |
| Bixbyit | Mn-Fe-Oxid | schwarz bis braun |
| $CeO_2$ | Ce-Oxid | weiß |
| Rutil $TiO_2$ | Ti-Oxid | weiß |
| Rutil $TiO_2$ | Ti-Cr-W-Oxid | braun |
| Baddeleyit $ZrO_2$ | Zr-V-Oxid | gelb |
| Kassiterit $SnO_2$ | Sn-Oxid | weiß |
| Kassiterit $SnO_2$ | Sn-Cr-Oxid | purpur |
| Korund $Al_2O_3$ | er-Al-Oxid | grün |
| Zirkon $ZrSiO_4$ | Zr-Oxid | weiß |
| Zirkon $ZrSiO_4$ | Zr-Si-Pr-Oxid | gelb |
| Zirkon $ZrSiO_4$ | Zr-Si-V-Oxid | blau |

Tabelle 3: Zusammensetzungen und Eigenschaften von Basisgläsern

| Basisglas | I | II | III | IV | V | VI | VII | VIII | IX |
|---|---|---|---|---|---|---|---|---|---|
| Zusammensetzung (Gew.%) | | | | | | | | | |
| $Li_2O$ | 3 | 7 | 5 | | | | 3,0 | 3,1 | 3 |
| $Na_2O$ | 8 | | | 1,6 | 5,5 | 3,5 | 0,5 | | |

(fortgesetzt)

| Basisglas | I | II | III | IV | V | VI | VII | VIII | IX |
|---|---|---|---|---|---|---|---|---|---|
| **Zusammensetzung (Gew.%)** | | | | | | | | | |
| $K_2O$ | 3 | | | 7,2 | | 0,5 | | | |
| MgO | | | | | | | 1,0 | 1,7 | 1,5 |
| cao | | | 1,2 | 3,6 | | | 1,0 | 2 | 2 |
| SrO | | | 1 | | | | | 2,3 | 2 |
| BaO | | | | | | | 3,0 | | |
| ZnO | | 10 | 3,4 | 1,5 | | | 1,0 | 2,2 | 2,2 |
| $B_2O_3$ | 18 | 18 | 22 | 24,4 | 18 | 13 | 17,0 | 16,7 | 16,8 |
| $Al_2O_3$ | 7 | 15 | 6 | 17,5 | 7,5 | 2 | 17,0 | 16,6 | 15,5 |
| $SiO_2$ | 57 | 50 | 59,3 | 42,2 | 54 | 81 | 53,5 | 54,3 | 53,0 |
| $P_2O_5$ | | | | | | | | | |
| $TiO_2$ | | | | | | | | | |
| $ZrO_2$ | | | 1,3 | 2 | | | 1,0 | 1,1 | 1,0 |
| $Bi_2O_3$ | | | | | 15 | | | | 2,0 |
| F | | | 0,8 | | | | 2,0 | | 1,0 |
| **Eigenschaften glasig** | | | | | | | | | |
| Transform ationstemperatur Tg °C | 505 | n.g. | 476 | 541 | 478 | 525 | 509 | 578 | 523 |
| Erweichungstemperatur Ew ($10^{7,6}$dPas) °C | 642 | n.g. | 660 | 762 | 699 | 820 | 732 | 755 | 716 |
| Verarbeitungstemperatur Va ($10^4$dPas) °C | 875 | n.g. | 902 | 1069 | 1067 | 1270 | 1076 | 1064 | 1027 |
| Thermische Ausdehnung $\alpha_{20/300}$ $10^{-6}$/K | 7,5 | n.g. | 4,8 | 5,9 | 5,4 | 3,3 | 4,42 | 4,4 | 4,44 |
| Dichte g/$cm^3$ | 2,46 | n.g. | 2,36 | 2,34 | 2,53 | 2,20 | 2,37 | 2,41 | 2,44 |
| n.g. = nicht gemessen | | | | | | | | | |

Um die Eignung der erfindungsgemäßen Beschichtungen bzw. Dekore für Kochflächen nachzuweisen, wurde das Beispiel 7 auf die für Kochflächen relevanten Gebrauchseigenschaften gemäß den in der DE 19721737 C1 beschriebenen Testmethoden untersucht. Die Tests wurden bestanden.

Tabelle 4: Zusammensetzungen und Eigenschaften der Glaspulver

| Glaspulver | | 1 | 2 | 3 | 4 | 5 | 6 | 7 | 8 | 9 | 10 | 11 | 12 |
|---|---|---|---|---|---|---|---|---|---|---|---|---|---|
| **Basisglas** Bezeichnung (Tab. 3) Massenanteile | (%) | I 87 | I 86 | III 89 | I 95 | VIII 87 | VIII 83 | III 83 | VI 87 | VII 92 | I 87 | IX 87 | VI 87 |
| **Kristallisierbare Komponenten** Massenanteile | (%) | $CeO_2$ 13 | $TIO_2$ 14 | $ZrO_2$ 11 | FeS 5 | $CeO_2$ 13 | $TiO_2$ 17 | $TiO_2$ 17 | $CeO_2$ 13 | $SnO_2$ 8 | $ZrO_2$ 13 | $ZrO_2$ 13 | $ZrO_2$ 13 |
| **Farbdotierungen** Massenanteite | (%) | | | | | | | | | | | | |
| **Korngröße** $d_{50}$ $d_{90}$ | ($\mu$m) | 1,6 3,0 | 1,7 3,4 | 1,9 3,5 | 1,6 3,0 | 1,7 3,1 | 1,8 3,4 | 1,6 2,9 | 1,5 2,9 | 1,8 3,3 | 1,5 2,9 | 1,6 2,9 | 1,5 2,9 |
| **Eigenschaften glasig** | | | | | | | | | | | | | |
| Transformationstemperatur Tg | °C | 517 | 499 | 519 | 500 | 583 | 547 | 469 | 561 | 514 | 511 | 548 | 575 |
| Thermische Ausdehnung $\alpha_{20/300}$ | $10^{-5}$/K | 7,7 | 7,5 | 4,6 | 7,6 | 4,9 | 5,2 | 5,2 | 3,8 | 4,4 | 7,3 | 4,5 | 3,1 |
| Dichte | $g/cm^3$ | 2,68 | 2,55 | 2,50 | 2,47 | 2,67 | 2,59 | 2,53 | 2,47 | 2,51 | 2,55 | 2,56 | 2,36 |

Tabelle 4: Zusammensetzungen und Eigenschaften der Glaspulver (Fortsetzung)

| Glaspulver | | 13 | 14 | 15 | 16 | 17 | 18 |
|---|---|---|---|---|---|---|---|
| **Basisglas** | | | | | | | |
| Bezeichnung (Tab. 3) | | VIII | III | III | III | II | IX |
| Massenanteile | (%) | 77 | 83 | 76 | 76 | 87 | 76 |
| **Kristallisierbare Komponenten** | | $TiO_2$ | $TiO_2$ | Spinell $Co(Cr,Fe)_2O_4$ | Spinell $(Mn,Fe)_2O_3$ | $CeO_2$ | Spinell $(Mn,Fe)_2O_3$ |
| Massenanteile | (%) | 23 | 17 | 24 | 24 | 13 | 24 |
| **Farbdotierungen** | | CoO | $Cr_2O_3$ | | | | |
| Massenanteile | (%) | 0,5 | 1 | | | | |
| | | $Cr_2O_3$ | | | | | |
| | | 0,1 | | | | | |
| **Korngröße** | ($\mu$m) | | | | | | |
| $d_{50}$ | | 1,6 | 1,7 | 1,8 | 1,7 | 2,1 | 2,2 |
| $d_{90}$ | | 3,3 | 3,3 | 3,4 | 3,3 | 4,0 | 4,6 |
| **Eigenschaften glasig** | | | | | | | |
| Transformationstemperatur Tg | °C | 551 | 478 | n.g. | n.g. | n.g. | n.g. |
| Thermische Ausdehnung $\alpha_{20/300}$ | $10^{-6}$/K | 5,4 | 5,4 | n.g. | n.g. | n.g. | n.g. |
| Dichte | g/cm$^3$ | 2,68 | 2,55 | n.g. | n.g. | n.g. | n.g. |
| | | | | | | | |
| n.g. = nicht gemessen | | | | | | | |

Tabelle 5: Beispiele für erfindungsgemäß beschichtete Glaskeramikartikel und Vergleichsbeispiele

| Beispiel | | 1 | 2 | 3 | 4 | 5 | 6 | 7 | 8 | 9 | 10 | 11 |
|---|---|---|---|---|---|---|---|---|---|---|---|---|
| **Substrat** | | (a) glasig | (b) glasig | (b) glasig | (c) glasig | (c) glasig | (c) glasig | (c) glasig | (b) glasig | (b) glasig | (c) glasig | (c) glasig |
| **Schichtbildendes Material (Massenanteile)** | | | | | | | | | | | | |
| Glaspulver (Bezeichnung Tab. 4) Kristalline Zusätze | (%) | 100 % 1 | 100% 2 | 100% 3 | 100% 4 | 100% 5 | 100% 6 | 100% 7 | 100% 7 | 100% 9 | 100% 10 | 100% 11 |
| **Schichtdicke** | ($\mu$m) | 3,4 | 3,8 | 3,8 | 3,7 | 3,2 | 3,2 | 3,1 | 3,4 | 3,1 | 2,8 | 2,9 |
| **Farbe (Remission)** $L^*$ $a^*$ $b^*$ $\Delta E$ | | weiß 47/61 0/1 -13/-2 17/18 | weiß 67/70 -2/-2 -8/-6 29/10 | grau 42/65 0/0 -6/6 8/12 | schwarzbraun 30 5 3 8 | violettweiß 35 2 -10 15 | blauweiß 49 -1 -25 35 | grau-weiß 68 -3 -9 45 | weiß 67/70 -2/-2 -111-8 30/12 | transparent-matt 40,5/74 0/-2 0/3 2/2 | grau 36,5 -0,5 -6 14 | schwarzblau 26 0 -2 3 |
| **Rauigkeit** $R_a$ $R_{sk}$ $rms_{10\,mm^{-1}...20\,mm^{-1}}$ $rms_{20\,mm^{-1}...50\,mm^{-1}}$ | ($\mu$m) | n.g. | 0,19 - 0,21 0,020 0,010 | 0,21 0,13 0,025 0,011 | 0,24 - 0,29 0,016 0,013 | 0,20 0,11 0,019 0,011 | 0,20 0,17 0,025 0,018 | 0,31 0,31 0,039 0,014 | 0,37 0,13 0,062 0,030 | 0,30 0,23 0,058 0,017 | 0,23 0,26 0,035 0,014 | 0,23 0,31 0,035 0,014 |
| **Topfgeräusche** Bewertung (0-6) | | n.g. | 1 | 1 | 1 | 1 | 2 | 2 | 2 | 2 | 2 | 2 |
| n.g. = nicht gemessen | | | | | | | | | | | | |

EP 3 067 333 B1

Tabelle 5: Beispiele für erfindungsgemäß beschichtete Glaskeramikartikel (Fortsetzung)

| Beispiel | | 12 | 13 | 14 | 15 | j 16 | 17 | 18 | 19 |
|---|---|---|---|---|---|---|---|---|---|
| **Substrat** | | (a) glasig | (c) glasig | (b) glasig | (c) glasig | (b) glasig | (c) glasig | (c) glasig | (b) glasig |
| **Schlchtblldendes Material (Massenanteile)** | | | | | | | | | |
| Glaspulver (Bezeichnung Tab. 4) Kristalline Zusätze | (%) | 100% 12 | 100% 13 | 100% 14 | 100% 15 | 100% 17 | 100% 18 | 95% 15 5% Nanopigment | 75% 7 25% 15 |
| **Schichtdicke** | ($\mu$m) | 3,4 | 3,6 | 3,1 | 2,8 | 3,1 | 2,5 | 2,9 | 3,0 |
| **Farbe (Remission)** L* a* b* $\Delta$ E | | weiß-matt 39/70 0/-2 1/4 118 | blau 58 -7 -18 39 | gelb-weiß 63/66,5 -6/-4 -3/0,5 25/10 | schwarzbraun 30 0 3 7 | grau 48/58 -11-0,5 -91-3 13,5/19 | braun 33 2 5 10 | braun 29 1 3 6 | beige 57,5/61,5 -3/-2 -1/3 19/15 |
| **Rauigkeit** Ra Rsk rms$_{10mm-1 \ldots 20 \, mm-1}$ rms$_{20 \, mm-1 \ldots 50 \, mm-1}$ | ($\mu$m) | n.g. | 0,28 0,31 0,045 0,013 | 0,27 - 0,03 0,086 0,037 | 0,24 0,59 0,060 0,023 | 0,19 0,23 0,052 0,022 | 0,28 0,20 0,089 0,019 | 0,23 - 0,07 0,096 0,064 | 0,38 - 0,19 0,095 0,064 |
| Topfgeräusche Bewertung (0-6) | | n.g. | 2 | 2 | 2 | 2 | 2 | 3 | 3 |
| n.g. = nicht gemessen | | | | | | | | | |

Tabelle 5: Beispiele für erfindungsgemäß beschichtete Glaskeramikartikel und Vergleichsbeipiele (23, 24) sowie unbeschichtete Glaskeramiksubstrate (Beispiele 25, 26, 27) (Fortsetzung)

| Beispiel | | 20 | 21 | 22 | 23 | 24 | 25 | 26 | 27 |
|---|---|---|---|---|---|---|---|---|---|
| Substrat | | (c) krist. | (a) krist. | (a) krist. | (c) glasig | (c) glasig | (b) krist. | (c) krist. | (a) krist. |
| **Schichtbildendes Material (Massenanteile)** | | | | | | | | | |
| Glaspulver (Bezeichnung Tab. 4, 3) Kristalline Zusätze | (%) | 100% 7 | 100% 16 | 100% 16 | 80% Basisglas II 20% Spinell $(Mn,Fe)_2O_3$ | 80% Basisglas III 20% Spinell $Co(Cr,Fe)_2O_4$ | ohne Beschichtung | ohne Beschichtung | ohne Beschichtung |
| **Schichtdicke** | ($\mu$m) | 3,5 | 3,2 | 3,0 | 2,9 | 3,1 | | | |
| **Farbe (Remission)** | | grau-weiß | braun | braun | braun | schwarz | Substrat | Substrat | Substrat |
| L* | | 67 | 56 | 63 | 27 | 25 | 39/76 | 24 | 39/78 |
| a* | | -4 | 18 | 19 | 2 | 0 | 01-2 | 0 | 01-3 |
| b* | | -10 | 40 | 43 | 1 | -0,5 | 1/2 | 0 | 2/3 |
| $\Delta$ E | | 44 | 56 | 56 | 4 | 1 | | | |
| **Rauigkeit** Ra Rsk $rms_{10\,mm-1\dots 20\,mm-1}$ $rms_{20\,mm-1\dots 50\,mm-1}$ | ($\mu$m) | 0,25 0,68 0,067 0,039 | 0,14 - 0,08 0,006 0,005 | 0,12 - 0,22 0,005 0,005 | 0,40 1,36 0,130 0,095 | 0,43 0,29 0,158 0,117 | 0,10 0,18 0,005 0,003 | 0,11 - 0,70 0,009 0,005 | 0,13 -0,26 0,005 0,003 |
| **Topfgeräusche** Bewertung (0-6) | | 2 | 1 | 1 | 5 | 5 | 0 | 0 | 0 |

**Patentansprüche**

1. Verfahren zur Herstellung eines Glaskeramikartikels mit einer farbigen glasbasierten Beschichtung, mit den folgenden Schritten:

   - Bereitstellen eines Substrats;
   - Applizieren eines schichtbildenden Materials auf eine Oberfläche des Substrats, wobei das schichtbildende Material wenigstens ein Glaspulver als Hauptbestandteil umfasst, und wobei das Glaspulver aus einem Basisglas besteht, dem farbgebende kristallisierbare Komponenten zugesetzt sind, die im Basisglas aufschmelzbar sind und beim Erkalten als anorganische Farbkörper auskristallisierbar sind;
   - Erwärmen des beschichteten Substrats, derart dass das Glaspulver aufschmilzt und anorganische Farbkörper auskristallisieren;
   - wobei das Substrat eine Glaskeramik in Form einer bereits keramisierten Glaskeramik oder im Grünglaszustand auf der Basis eines Lithiumaluminosilikat-Glases ist und wobei das Substrat im keramisierten Zustand eine thermische Ausdehnung ($\alpha_{20/700}$) im Bereich von 20 °C bis 700 °C von weniger als $2 \cdot 10^{-6}$/K aufweist.

2. Verfahren nach Anspruch 1, bei dem das Substrat in Form einer bereits keramisierten Glaskeramik bereitgestellt wird.

3. Verfahren nach Anspruch 1, bei dem das Substrat im Grünglaszustand bereitgestellt wird und beim Erwärmen keramisiert wird.

4. Verfahren nach einem der vorhergehenden Ansprüche, bei dem das schichtbildende Material weniger als 20 Gew.-% kristalline Bestandteile enthält.

5. Verfahren nach einem der vorhergehenden Ansprüche, bei dem die Temperatur beim Erwärmen über der Erweichungstemperatur des Glaspulvers liegt und das Glaspulver bei der maximalen Temperatur des Einbrandes glatt fließt.

6. Verfahren nach einem der vorhergehenden Ansprüche, bei dem das Glaspulver mit mehr als 3 Gew.-% bis höchstens 50 Gew.-% an kristallisierbaren Komponenten bereitgestellt wird.

7. Verfahren nach einem der vorhergehenden Ansprüche, bei dem ein Glaspulver verwendet wird, das im Grünglaszustand eine Erweichungstemperatur im Bereich von 560 °C bis 850 °C aufweist.

8. Verfahren nach einem der vorhergehenden Ansprüche, bei dem ein Glaspulver mit einer mittleren Korngröße von weniger als 4 $\mu$m, bevorzugt weniger als 2,5 $\mu$m, verwendet wird.

9. Verfahren nach einem der vorhergehenden Ansprüche, bei dem eine Menge an schichtbildendem Material aufgebracht wird, die nach dem Einbrand eine Schichtdicke von weniger als 20 $\mu$m ergibt.

10. Glaskeramikartikel mit einem Substrat aus Glaskeramik und mit einer farbigen, glasbasierten Beschichtung auf mindestens einer Oberfläche des Substrates, wobei die Beschichtung eine aufgeschmolzene Schicht mit Glas als Hauptbestandteil und mit darin auskristallisierten, anorganischen Farbkörpern aufweist, wobei das Substrat aus einer Lithiumaluminosilikat-Glaskeramik besteht, vorzugsweise mit Hochquarz- und/oder Keatit-Mischkristallen als Hauptkristallphase, wobei das Substrat eine thermische Ausdehnung ($\alpha_{20/700}$) im Bereich von 20 °C bis 700 °C von weniger als $2 \cdot 10^{-6}$/K aufweist, und wobei die glasbasierte Beschichtung aus einem Glaspulver aus einem Basisglas hergestellt ist, dem farbgebende kristallisierbare Komponenten zugesetzt sind, die im Basisglas aufschmolzen und beim Erkalten als anorganische Farbkörper auskristallisiert sind.

11. Glaskeramikartikel nach Anspruch 10, bei dem die Rauigkeit der Beschichtung oder des Dekors einen mit Weißlicht-Interferenzmikroskopie bestimmten Rauheitsanteil rms im Bereich von 10 mm$^{-1}$ bis 20 mm$^{-1}$ kleiner als 0,1 $\mu$m und einen Rauheitsanteil rms im Bereich von 20 mm$^{-1}$ bis 50 mm$^{-1}$ kleiner als 0,045 $\mu$m aufweist.

12. Glaskeramikartikel nach einem der Ansprüche 10 bis 11, mit einer geräuschoptimierten Beschichtung, vorzugsweise mit einer Schärfe < 3 acum und/oder einer Lautheit < 7 sone, gemessen nach DIN 45631/A1:2010-03 und DIN 45692:2009-08 auf dem beschichteten Substrat mit den Außenmaßen 500 x 550 mm, unter Verwendung eines Stahlemailtopfes mit emailliertem Boden der Firma Silit, des Typs Silargan Bratentopf 20 cm Accento mit einem Durchmesser des Stellbodens von 17 cm und einem innen aufgenommenen Gewicht der Masse von 1 kg, unter Verschieben des Topfes mit einer Geschwindigkeit von 0,08 m/s.

**Claims**

1. A method of producing a glass-ceramic article comprising a colored glass-based coating, comprising the steps of:

   - providing a substrate;
   - applying a layer-forming material onto a surface of the substrate, wherein the layer-forming material comprises at least one glass powder as the main consitutent, and wherein the glass powder consists of a base glass to which coloring crystallizable components are added which are fusible in the base glass and are crystallizable as inorganic color bodies upon cooling;
   - heating the coated substrate such that the glass powder melts and inorganic color bodies crystallize;
   - wherein the substrate is a glass-ceramic in the form of an already ceramized glass-ceramic or in the green-glass condition based on a lithium aluminosilicate glass and wherein the substrate in the ceramized condition comprises a thermal expansion ($\alpha_{20/700}$) in the range of 20 °C to 700 °C of less than $2 \cdot 10^{-6}$/K.

2. The method according to claim 1, wherein the substrate is provided in the form of an already ceramized glass-ceramic.

3. The method according to claim 1, wherein the substrate is provided in the green-glass condition and is ceramized during heating.

4. The method according to any of the preceding claims, wherein the layer-forming material comprises less than 20 wt.-% of crystalline components.

5. The method according to any of the preceding claims, wherein the temperature during heating is above the softening temperature of the glass powder, and wherein the glass powder flows smoothly at the maximum temperature of the fusion.

6. The method according to any of the preceding claims, wherein the glass powder is provided with more than 3 wt.-% up to a maximum of 50 wt.-% of crystallizable components.

7. The method of any of the preceding claims, wherein a glass powder is used having in green-glass condition a softening temperature in the range of 560 °C to 850 °C.

8. The method of any of the preceding claims, wherein a glass powder is used having an average grain size of less than 4 $\mu$m, preferably of less than 2.5 $\mu$m.

9. The method of any of the preceding claims, wherein an amount of layer-forming material is applied which after the fusion yields a layer thickness of less than 20 $\mu$m.

10. A glass-ceramic article comprising a substrate of glass-ceramic and having a colored, glass-based coating on at least one surface of the substrate, wherein the coating comprises a fused layer with glass as the main constituent and with inorganic color bodies crystallized therein, wherein the substrate consists of an lithium aluminosilicate glass-ceramic, preferably with high-quartz and/or keatite-mixed crystals as the main crystal phase, wherein the substrate has a thermal extension ($\alpha_{20/700}$) in the range of 20 °C to 700 °C of less than $2 \cdot 10^{-6}$/K, and wherein the glass-based coating is made of a glass powder of a base glass to which coloring crystallizable components are added which are melted in the base glass and crystallized as inorganic color bodies upon cooling.

11. The glass ceramic article according to claim 10, wherein the roughness of the coating or decoration comprises a roughness fraction rms in the range of 10 mm$^{-1}$ to 20 mm$^{-1}$ of less than 0.1 $\mu$m, and a roughness portion rms in the range of 20 mm$^{-1}$ to 50 mm$^{-1}$ of less than 0.045 $\mu$m, as determined by white light interference microscopy.

12. The glass-ceramic article according to any one of claims 10 to 11, having a noise-optimized coating, preferably with an acuteness < 3 acum and/or a loudness < 7 sone, measured according to DIN 45631/A1:2010-03 and DIN 45692:2009-08 on the coated substrate with outer dimensions 500 x 550 mm, using a steel-enamel pot with an enamel bottom of the company Silit, of the type Silargan roasting pot 20 cm Accento having a diameter of the stand bottom of 17 cm and a weight of a mass of 1 kg received inside, while displacing the pot at a speed of 0.08 m/s.

**Revendications**

1. Procédé de fabrication d'un article en vitrocéramique comportant un revêtement coloré à base de verre, comportant les étapes suivantes :

   - fourniture d'un substrat ;
   - application d'un matériau filmogène sur une surface du substrat, le matériau filmogène comprenant au moins une poudre de verre en tant que constituant principal, et la poudre de verre étant constituée d'un verre de base, auquel sont ajoutés des composants cristallisables colorants, qui sont fusibles dans le verre de base et qui peuvent cristalliser au refroidissement sous forme de pigments inorganiques ;
   - chauffage du substrat revêtu de façon que la poudre de verre fonde et que des pigments inorganiques se séparent par cristallisation ;
   - le substrat étant une vitrocéramique sous forme d'une vitrocéramique déjà céramisée ou à l'état de verre vert à base d'un verre à l'aluminosilicate de lithium, et le substrat présentant à l'état céramisé une dilatation thermique ($\alpha_{20/700}$) dans la plage de 20 °C à 700 °C inférieure à 2 • $10^{-6}$/K.

2. Procédé selon la revendication 1, dans lequel le substrat est fourni sous forme d'une vitrocéramique déjà céramisée.

3. Procédé selon la revendication 1, dans lequel le substrat est fourni à l'état de verre vert et est céramisé par chauffage.

4. Procédé selon l'une des revendications précédentes, dans lequel le matériau filmogène contient moins de 20 % en poids de constituants cristallins.

5. Procédé selon l'une des revendications précédentes, dans lequel la température lors du chauffage est supérieure à la température de ramollissement de la poudre de verre, et la poudre de verre présente un écoulement lisse à la température maximale de la cuisson.

6. Procédé selon l'une des revendications précédentes, dans lequel la poudre de verre est fournie avec plus de 3 % en poids à au plus 50 % en poids de composants cristallisables.

7. Procédé selon l'une des revendications précédentes, dans lequel on utilise une poudre de verre qui, à l'état de verre vert, présente une température de ramollissement dans la plage de 560 °C à 850 °C.

8. Procédé selon l'une des revendications précédentes, dans lequel on utilise une poudre de verre ayant une granulométrie moyenne inférieure à 4 $\mu$m, de préférence inférieure à 2,5 $\mu$m.

9. Procédé selon l'une des revendications précédentes, dans lequel on applique une quantité de matériau filmogène qui après cuisson donne une épaisseur de couche inférieure à 20 $\mu$m.

10. Article en vitrocéramique comportant un substrat en vitrocéramique et un revêtement coloré à base de verre sur au moins une surface du substrat, le revêtement présentant une couche fondue comportant du verre en tant que constituant principal et des pigments inorganiques qui en sont séparés par cristallisation, le substrat étant constitué d'une vitrocéramique d'aluminosilicate de lithium, ayant de préférence en tant que phase cristalline principale des cristaux de quartz bêta et/ou de kéatite, le substrat présentant une dilatation thermique ($\alpha_{20/700}$) dans la plage de 20 °C à 700 °C inférieure à 2 • $10^{-6}$/K, et le revêtement à base de verre étant fabriqué à partir d'une poudre de verre constituée d'un verre de base, auquel sont ajoutés des composants cristallisables colorants, qui fondent dans le verre de base et qui, lors d'un refroidissement, se séparent par cristallisation sous forme de pigments inorganiques.

11. Article en vitrocéramique selon la revendication 10, dans lequel la rugosité du revêtement ou du décor présente une rugosité moyenne quadratique, déterminée au microscope interférentiel en lumière blanche, dans la plage de 10 mm$^{-1}$ à 20 mm$^{-1}$, inférieure à 0,1 $\mu$m et une rugosité moyenne quadratique dans la plage de 20 mm$^{-1}$ à 50 mm$^{-1}$ inférieure à 0,045 $\mu$m.

12. Article en vitrocéramique selon l'une des revendications 10 à 11, comportant un revêtement à bruit optimisé, de préférence avec une acuité < 3 acum et/ou une sonie < 7 sone mesurées selon DIN 45631/A1:2010-03 et DIN 45692:2009-08 sur le substrat revêtu ayant les dimensions extérieures 500 x 550 mm, par utilisation d'une casserole en acier émaillé, ayant un fond émaillé de la société Silit, du type Silargan cocotte 20 cm Accento, avec un diamètre du fond de 17 cm et un poids, pris à l'intérieur, de la masse de 1 kg, par déplacement de la casserole à une vitesse de 0,08 m/s.

Fig.1: Gefügeaufnahme von der Beschichtung des Substrates (a) mit Glas 7 aus Tabelle 4 im Querschnitt mit Beschichtung (Maßstab: lange Bildkante = 12 µm)

Fig. 2: Lithografie des Siebdrucks der Musterplatten der Musterplatten der Beispiele (Tabelle 5) Maßstab: Breite der Dekorstreifen 28 mm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1870383 A1
- DE 19721737 C1
- US 5326728 A
- EP 1435759 A2
- DE 10338165 A1
- DE 4201286 C2
- EP 0895969 A1

- DE 102012202697 A1
- DE 102008050263 A1
- EP 1837314 A1
- EP 1170264 A1
- EP 1837312 A1
- EP 1837313 A1